# EUROPÄISCHE PATENTSCHRIFT

(11) **EP 3 441 266 B1**
(45) Veröffentlichungstag und Bekanntmachung des Hinweises auf die Patenterteilung: **11.10.2023**
(21) Anmeldenummer: 18187266.4
(22) Anmeldetag: 03.08.2018
(51) Int. Cl.: B60R 25/01, B60R 16/023

(54) **TÜRGRIFFMODUL**
DOOR HANDLE MODULE
MODULE DE POIGNÉE DE PORTE

(30) Priorität: 07.08.2017 DE 102017117926
(43) Veröffentlichungstag der Anmeldung: 13.02.2019
(73) Patentinhaber: HUF Hülsbeck & Fürst GmbH & Co. KG, 42551 Velbert (DE)
(72) Erfinder: Gabriel, Lars, 42555 Velbert (DE); Peschl, Andreas, 42555 Velbert (DE)
(74) Vertreter: Bals, Rüdiger

(56) Entgegenhaltungen:
- EP-A2- 2 458 119
- WO-A1-2008/137634
- DE-A1- 10 018 931
- DE-A1-102006 025 075
- DE-A1-102017 123 065
- DE-C1- 19 943 989
- GB-A- 2 180 415
- US-B1- 6 768 413

## Beschreibung

Die vorliegende Erfindung betrifft ein Türgriffmodul für eine Griffvorrichtung eines beweglichen Teils, wie z. B. einer Tür oder einer Klappe, eines Fahrzeugs, insbesondere eines Nutzfahrzeugs, gemäß dem unabhängigen Vorrichtungsanspruch, ein Verfahren zum Montieren eines Türgriffmoduls an einer Griffvorrichtung gemäß dem entsprechenden unabhängigen Verfahrensanspruch, ein Verfahren zum Herstellen eines Türgriffmoduls für eine Griffvorrichtung gemäß dem entsprechenden unabhängigen Verfahrensanspruch sowie ein Verfahren zum Bereitstellen eines Türgriffmoduls für eine Griffvorrichtung gemäß dem entsprechenden unabhängigen Verfahrensanspruch.

Griffvorrichtungen für Fahrzeuge, wie z.B. aus EP2458119A bekannt, können mitunter eine lange Serienzeit aufweisen, sodass entsprechende Modelle der Griffvorrichtungen über einen langen Zeitraum, insbesondere an Nutzfahrzeugen, Einsatz finden. In solchen Griffvorrichtungen können Funktionalitäten moderner Griffvorrichtungen, bspw. aufgrund von fehlenden elektronischen Funktionen, fehlen, da bei Fahrzeugen mit einer langen Einsatzzeit der Produktlebenszyklus entsprechend verlängert ist und der Funktionsumfang bereits verbauter Griffvorrichtungen eingeschränkt ist. Aufrüsten von Elektronikeinheiten an herkömmlichen Griffvorrichtungen ist mit einem erheblichen Montageaufwand und einem umfassenden Umbau der Griffvorrichtungen verbunden. Zudem sind nachgebaute Elektronikeinheiten Witterungseinflüssen ausgesetzt und können dadurch in ihrer Funktion gestört werden.

Es ist somit eine Aufgabe der Erfindung, die voranstehenden aus dem Stand der Technik bekannten Nachteile zumindest teilweise zu beheben. Insbesondere ist es die Aufgabe der vorliegenden Erfindung, einen erweiterten Funktionsumfang für vorhandene Griffvorrichtungen an Fahrzeugen, insbesondere Nutzfahrzeugen, bereitzustellen und vorzugsweise den Komfort und/oder die Sicherheit bei Sicherheitssystemen, insbesondere bei Zugangskontrollsystemen der Fahrzeuge nachträglich zu verbessern. Weiterhin ist es eine optionale Aufgabe der vorliegenden Erfindung, ein Türgriffmodul für eine Griffvorrichtung eines beweglichen Teils, wie z. B. einer Tür oder einer Klappe, eines Fahrzeugs, insbesondere eines Nutzfahrzeugs, bereitzustellen, welches einfach und kostengünstig in der Herstellung ist, welches einfach und ohne großen Montageaufwand an einer Griffvorrichtung montiert werden kann, welches witterungsbeständig ausgestaltet ist, zuverlässig im Betrieb ist und eine lange Lebensdauer aufweist. Zudem ist es vorzugsweise eine Aufgabe der Erfindung, ein Verfahren zum Montieren eines solchen Türgriffmoduls an einer Griffvorrichtung, ein Verfahren zum Herstellen eines solchen Türgriffmoduls für eine Griffvorrichtung und ein Verfahren zum Bereitstellen eines entsprechenden Türgriffmoduls für eine Griffvorrichtung bereitzustellen.

Die voranstehende Aufgabe wird gelöst durch ein Türgriffmodul mit den Merkmalen des ersten unabhängigen Vorrichtungsanspruchs, ein Verfahren zum Montieren eines Türgriffmoduls an einer Griffvorrichtung mit den Merkmalen des entsprechenden unabhängigen Verfahrensanspruchs, ein Verfahren zum Herstellen eines Türgriffmoduls für eine Griffvorrichtung mit den Merkmalen des entsprechenden unabhängigen Verfahrensanspruchs sowie ein Verfahren zum Bereitstellen eines Türgriffmoduls für eine Griffvorrichtung mit den Merkmalen des entsprechenden unabhängigen Verfahrensanspruchs.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Türgriffmodul beschrieben worden sind, selbstverständlich auch im Zusammenhang mit den erfindungsgemäßen Verfahren und jeweils umgekehrt, sodass bezüglich der Offenbarung zu den einzelnen Erfindungsaspekten stets wechselseitig Bezug genommen wird bzw. werden kann.

Die Erfindung stellt ein Türgriffmodul für eine Griffvorrichtung eines beweglichen Teils, wie z. B. einer Tür oder Klappe, eines Fahrzeugs, insbesondere eines Nutzfahrzeugs, bereit, aufweisend: ein Gehäuse, in welchem eine, insbesondere abgeschlossene, vorzugsweise abgedichtete, Aufnahme ausgebildet ist, in der eine Elektronikeinheit zum Steuern eines Sicherheitssystems des Fahrzeuges angeordnet ist, wobei die Elektronikeinheit mindestens ein Kommunikationselement zum Austauschen von Daten mit einer fahrzeugexternen Kommunikationseinheit aufweist.

Die Elektronikeinheit dient im Rahmen der Erfindung dazu, eine kabellose Kommunikationsfähigkeit mit einer fahrzeugexternen Kommunikationseinheit an der Griffvorrichtung des beweglichen Teils des Fahrzeuges bereitzustellen. Von der fahrzeugexternen Kommunikationseinheit, wie z. B. einem Mobilfunkgerät, Laptop und/oder ID-Geber, kann die Elektronikeinheit Daten, bspw. Identifikationsdaten, empfangen, die die Elektronikeinheit, bspw. zur Überprüfung, an das Sicherheitssystem, z. B. in Form eines Zugangskontrollsystems, weiterleiten kann. Die Weiterleitung der Daten von der Elektronikeinheit zum Sicherheitssystem kann wiederum über ein Kabel erfolgen. Nach einem erfolgreichen Datenaustausch zwischen der fahrzeugexternen Kommunikationseinheit und dem fahrzeugseitigen Sicherheitssystem, bspw. zur Identifikations- bzw. Berechtigungsabfrage, kann die Elektronikeinheit, bspw. über das Sicherheitssystem des Fahrzeuges, eine Betätigung eines Schlosses des beweglichen Teils veranlassen, um das bewegliche Teil zu entriegeln, wodurch das bewegliche Teil zum Öffnen mittels der Griffvorrichtung freigegeben wird. Somit kann das erfindungsgemäße Türgriffmodul eine Fernsteuerung des Sicherheitssystems ermöglichen. Dadurch kann der Komfort beim Bedienen des Sicherheitssystems an die modernen Erfordernisse angepasst und somit verbessert werden. So können z. B. die Fahrer des Fahrzeuges nachträglich (gemeint ist durch die Umrüstung) durch den Einsatz der Erfindung in die Lage versetzt werden, (insbesondere ausschließlich) mit ihrem Mobilfunkgerät das Fahrzeug zu öffnen und ggf. zu starten. Hierzu ist es denkbar, dass dem Fahrer entsprechende Zugangsdaten (bspw. von einer Spedition) für das Fahrzeug drahtlos zu geschickt werden, womit er das Fahrzeug bedienen und fahren kann. Zudem kann durch das erfindungsgemäße Türgriffmodul die Sicherheit beim Bedienen des Sicherheitssystems verbessert werden.

Darüber hinaus ist es im Rahmen der Erfindung denkbar, dass die Elektronikeinheit zur Speicherung von Fahrdaten, bspw. einem Fahrtenbuch, Benutzerprofilen oder verschleißbezogenen Fahrzeugdaten dienen kann, um die vorhandenen Funktionen im Fahrzeug zu erweitern.

Das erfindungsgemäße Türgriffmodul kann vorzugsweise an einer bereits bestehenden und/oder technisch vorhandenen Griffvorrichtung eines Fahrzeugs, insbesondere eines Nutzfahrzeugs, montiert werden, z. B. im Sinne einer Nachrüstung bei Altfahrzeugen oder einer Zusatzausstattung bei Neufahrzeugen. Das erfindungsgemäße Türgriffmodul, insbesondere die Elektronikeinheit, kann die erforderliche Hardware für eine Fernbedienung des Sicherheitssystems mit sich bringen. Außerdem kann das erfindungsgemäße Türgriffmodul, insbesondere die Elektronikeinheit, die erforderliche Software bereitstellen, um ein Fernbedienungssystem nach Art eines Keyless-Go- oder Keyless-Enter-Systems zu ermöglichen. Das Türgriffmodul mit der Elektronikeinheit kann vorteilhafterweise an die vorhandene Fahrzeugelektronik bzw. an das vorhandene Steuersystem der Fahrzeugelektronik angeschlossen werden, um eine vorhandene Zentralverriegelung und ein vorhandenes Sicherheitssystem ansteuern zu können.

Die neuen Funktionen werden vorteilhafterweise unter Beibehaltung der geometrischen und aerodynamischen Ausgestaltung der Griffvorrichtung bereitgestellt. Das erfindungsgemäße Türgriffmodul kann dabei designtechnisch und haptisch an die vorhandene Griffvorrichtung des Fahrzeugs angepasst sein, um das Erscheinungsbild der Griffvorrichtung nicht zu beeinträchtigen. Das Türgriffmodul kann bspw. an einer Modulaufnahme der Griffvorrichtung montiert werden. Die Modulaufnahme kann eine bereits vorhandene Aufnahme an der Griffvorrichtung, bspw. eine Schließzylinderaufnahme, oder eine extra dafür herzustellende Aufnahme, bspw. in Form einer Bohrung, sein. Die Aufnahme kann an einem Griff, an einer Griffmulde oder an einer Außenschale der Griffvorrichtung bzw. an einem Teil der Karosserie vorgesehen sein, an welchen die Griffvorrichtung angeordnet ist. Zudem ist es denkbar, dass das Türgriffmodul kraft- und/oder formschlüssig an der Modulaufnahme der Griffvorrichtung befestigt werden kann. Weiterhin kann ein Gehäuse für das Türgriffmodul aus Kunststoff bereitgestellt werden, bspw. aus Polyamid, vorzugsweise Polyamid 6, oder glasfaserverstärkten Kunststoffen. Die sichtbare Seite des Gehäuses kann lackiert, beschichtet oder durchgefärbt sein, um die Optik an das Fahrzeug bzw. an die Griffvorrichtung anzupassen. Das Türgriffmodul kann vorzugsweise zumindest abschnittsweise flächenbündig an der Griffvorrichtung angeordnet werden. Somit kann eine ästhetisch ansprechende Ausgestaltung der Griffvorrichtung erzielt werden. Außerdem können somit die Verletzungsrisiken am Türgriffmodul minimiert werden.

Der Erfindungsgedanke liegt dabei darin, dass das erfindungsgemäße Gehäuse die Elektronikeinheit umschließt, insbesondere dass durch das erfindungsgemäße Gehäuse eine vorzugsweise abgeschlossene und bevorzugt abgedichtete Aufnahme für die Elektronikeinheit bereitgestellt wird, in welcher die Elektronikeinheit gegen äußere Einflüsse, bspw. Feuchtigkeit und/oder Schmutz, zuverlässig und dauerhaft geschützt ist. Das erfindungsgemäße Türgriffmodul wird als ein, vorzugsweise komplett abgeschlossenes und abgedichtetes, Nachrüstteil bereitgestellt, welches einfach, bequem und ohne großen Montageaufwand an der Griffvorrichtung montiert werden kann. Im Rahmen der Erfindung ist es denkbar, dass das Türgriffmodul als ein sehr flaches Modul bereitgestellt wird. Die Befestigung des erfindungsgemäßen Türgriffmoduls kann über einen ursprünglichen Schaft eines mechanischen Schließzylinders der Griffvorrichtung stattfinden. Durch diesen Schaft kann auch ein Anschlusselement, bspw. in Form eines Kabels für die elektrische Verbindung der Elektronikeinheit mit dem Sicherheitssystem des Fahrzeuges durchgeleitet werden. Das Türgriffmodul kann selber über eine Bajonettverbindung mit einem speziellen Befestigungsadapter an der Griffvorrichtung befestigt werden. Dabei kann das Türgriffmodul von außen an der Montageaufnahme und der Befestigungsadapter von innen an der Montageaufnahme angesetzt werden, um miteinander verbunden zu werden. Durch diese Verbindung kann die Befestigung des Türgriffmoduls an der Griffvorrichtung gewährleistet werden. Der Befestigungsadapter kann innenseitig an der Griffvorrichtung verschraubt werden und das Anschlusselement bzw. das Kabel für die Elektronikeinheit durchführen. Denkbar ist, dass der Befestigungsadapter spezielle Klemm- bzw. Zugentlastungselemente für das Kabel aufweisen kann. Das Gehäuse des Türgriffmoduls kann vorzugsweise zweiteilig aufgebaut sein, um die flache Bauweise des Gehäuses zu ermöglichen, in dem die Elektronikeinheit vollständig vom Gehäuse umgeben anordbar ist. Dabei weist das Gehäuse einerseits einen wohlgefälligen Anblick auf und andererseits ist das Gehäuse in sich abgeschlossen, um die Elektronikeinheit geschützt und sicher unterzubringen. Die beiden Gehäuseteile können form- und/oder kraftschlüssig miteinander verbunden und vorzugsweise abgedichtet sein. Zusätzlich können die Gehäuseteile verklebt werden. Um die Elektronikeinheit gegen Feuchtigkeit zu schützen, kann die Aufnahme im Gehäuse mit einer Vergussmasse aufgefüllt werden, wozu zwei Füllstutzen rückseitig am Gehäuseunterteil vorgesehen sein können, die außerdem zur Zentrierung des Türgriffmoduls an der Türgriffvorrichtung dienen können.

Somit wird mithilfe des erfindungsgemäßen Türgriffmoduls ein Nachrüstteil bereitgestellt, um einen erweiterten Funktionsumfang für vorhandene Griffvorrichtungen an Fahrzeugen, insbesondere Nutzfahrzeugen, zu ermöglichen. Ferner wird mithilfe des erfindungsgemäßen Türgriffmoduls der Komfort und/oder die Sicherheit bei Sicherheitssystemen, insbesondere bei Zugangskontrollsystemen der Fahrzeuge verbessert. Das erfindungsgemäße Türgriffmodul ist vorteilhafterweise ein einfaches und kostengünstiges Bauteil, welches einfach und ohne großen Montageaufwand an einer Griffvorrichtung montiert werden kann, welches witterungsbeständig ausgestaltet und zuverlässig im Betrieb ist sowie eine lange Lebensdauer aufweist.

Ferner kann die Erfindung bei einem Türgriffmodul vorsehen, dass die Elektronikeinheit mindestens ein Kommunikationselement in Form eines Sensorelementes, insbesondere eines kapazitiven Sensorelementes aufweist, um die Elektronikeinheit zu wecken. Somit kann die Elektronikeinheit energiesparsam betrieben werden. Das Sensorelement kann einen Benutzer in der Umgebung des Türgriffmoduls erfassen und erst dann die Elektronikeinheit, bspw. für eine Berechtigungsabfrage, einschalten. Ein Sensorelement in Form eines kapazitiven Sensorelementes ist vorteilhafterweise ein einfaches und energiesparsames Bauteil, welches sogar ohne eine Energiezufuhr betrieben werden kann.

Weiterhin kann die Erfindung bei einem Türgriffmodul vorsehen, dass die Elektronikeinheit mindestens ein Kommunikationselement in Form eines drahtlosen Kommunikationselementes, insbesondere eines NFC-, Bluetooth-, Infrarot-, GSM-, LTE-, UMTS-, Mobilfunk-, HF-, UHF-, LF- und/oder WLAN-Kommunikationselementes aufweist, um eine Kommunikation des Sicherheitssystems des Fahrzeuges und der fahrzeugexternen Kommunikationseinheit sicherzustellen. Ein drahtloses Kommunikationselement kann den Komfort beim Bedienen des Sicherheitssystems des Fahrzeuges verbessern. Ein Kommunikationselement in Form eines NFC-Elementes ist vorteilhaft, weil es eine Kommunikation über definierte, begrenzte Distanzen ermöglichen kann. Dies kann die Sicherheit bei der Kommunikation mit der fahrzeugexternen Kommunikationseinheit erheblich erhöhen.

Des Weiteren kann im Rahmen der Erfindung bei einem Türgriffmodul vorgesehen sein, dass das Gehäuse einteilig oder zweiteilig mit einem ersten Gehäuseteil, welches zumindest zum Abdecken der Aufnahme oder zum sichtbaren Anordnen an der Griffvorrichtung dient, und mit einem zweiten Gehäuseteil ausgebildet ist, welches zumindest zum Befestigen der Elektronikeinheit oder zum Herstellen einer Verbindung des Verbindungselementes mit dem Befestigungsadapter dient. Einteiliges Gehäuse kann vorteilhaft sein, um die Herstellung des Türgriffmoduls zu vereinfachen. Ein zweiteiliges Gehäuse ist vorteilhaft, um ein möglichst flaches Türgriffmodul bereitzustellen, in dem die Elektronikeinheit einfach und bequem untergebracht werden kann.

Zudem ist es denkbar, dass das Gehäuse, insbesondere an einem zweiten Gehäuseteil, mindestens einen, vorzugsweise zwei, Aufnahmepins aufweisen kann, um die Elektronikeinheit am Gehäuse zu befestigen, insbesondere heißzuverstemmen. Somit kann die Elektronikeinheit einfach und bequem in einer durch die Aufnahmepins vorgegebenen Position am Gehäuse befestigt werden. Die Gehäusepins können weiterhin radial abstehende Abstandselemente am Ansatz der Gehäusepins umfassen, um die Elektronikeinheit auf einem bestimmten Abstand zum Gehäuse zu halten. Die Abstandselemente können vorteilhafterweise als Verstärkungsrippen für das Türgriffmodul dienen und außerdem ein Umgießen der Elektronikeinheit von beiden Seiten mit einer Vergussmasse innerhalb des Gehäuses ermöglichen. Dadurch kann die Elektronikeinheit vorteilhafterweise von allen Seiten zuverlässig abgedichtet und außerdem vor mechanischen Einwirkungen geschützt werden.

Ferner kann die Erfindung bei einem Türgriffmodul vorsehen, dass das Gehäuse, insbesondere an einem zweiten Gehäuseteil, eine Anschlussöffnung für ein Anschlusselement, vorzugsweise für einen ersten Stecker des Anschlusselementes zum Anschließen an der Elektronikeinheit, aufweist. Somit kann ein elektrischer und datentechnischer Anschluss der Elektronikeinheit nach dem Befestigen am Gehäuse bereitgestellt werden. Vorteilhafterweise kann die Anschlussöffnung komplementär zu dem ersten Stecker ausgebildet sein, sodass der Stecker in einer vorgegebenen Position an der Elektronikeinheit abgestützt und dort verlötet werden kann.

Weiterhin kann im Rahmen der Erfindung bei einem Türgriffmodul vorgesehen sein, dass das Gehäuse, insbesondere an einem zweiten Gehäuseteil, mindestens einen, vorzugsweise zwei, Füllstützen aufweist, um zumindest die Aufnahme mit einer Vergussmasse zu füllen oder das Gehäuse an einer Außenseite der Griffvorrichtung zu positionieren. Durch die Füllstutzen kann die Aufnahme um die Elektronikeinheit herum mit der Vergussmasse aufgefüllt werden. Um eine verbesserte Haftfähigkeit der Vergussmasse an zumindest einer inneren Oberfläche des Gehäuses zu erzielen, kann dieses zumindest mechanisch oder chemisch aufgeraut sein. Weiterhin können dieselben Füllstutzen zur Positionierung des Türgriffmoduls an der Griffvorrichtung genutzt werden. Somit kann ein zuverlässig abgedichtetes und leicht zu montierendes Türgriffmodul bereitgestellt werden.

Des Weiteren kann die Erfindung bei einem Türgriffmodul vorsehen, dass das Gehäuse, insbesondere an einem zweiten Gehäuseteil, mindestens eine, vorzugsweise mehrere, bevorzugt einseitig angeordnete, Verbindungsöffnungen aufweist, die mit Verbindungsstiften an einem ersten Gehäuseteil zusammenwirken, um das erste Gehäuseteil am zweiten Gehäuseteil zu befestigen, insbesondere heißzuverstemmen. Dadurch kann auf eine einfache und vorteilhafte Weise eine zuverlässige, vorzugsweise unlösbare Verbindung zwischen dem ersten und dem zweiten Gehäuseteil geschaffen werden. Bei einseitig bzw. unsymmetrisch angeordneten Verbindungsöffnungen kann vorteilhaft sein, dass die Ausrichtung des ersten Gehäuseteils zum zweiten Gehäuseteil vorgegeben werden kann, unter welcher die Gehäuseteile verbunden werden können. Somit kann der Zusammenbau des Türgriffmoduls intuitiv und weniger fehleranfällig gestaltet werden.

Zudem ist es denkbar, dass das Gehäuse, insbesondere an einem ersten Gehäuseteil einen Betätigungsabschnitt aufweisen kann, um auf mindestens ein Kommunikationselement der Elektronikeinheit insbesondere optisch und/oder taktil hinzuweisen. Dieser Betätigungsabschnitt kann durch Ein- oder Ausprägung an einer Oberfläche des ersten Gehäuseteil vorhanden sein, wobei auch nur der Rand des Betätigungsabschnitts entsprechend markiert sein kann. Somit kann die Bedienung des Türgriffmoduls erleichtert werden und der Benutzer zu einer richtigen Position des Kommunikationselementes geleitet werden, um eine Datenkommunikation mit der Elektronikeinheit einzuleiten.

Außerdem kann im Rahmen der Erfindung bei einem Türgriffmodul vorgesehen sein, dass das Gehäuse, insbesondere an einem ersten Gehäuseteil mindestens einen, vorzugsweise mehrere, bevorzugt einseitig angeordnete, Hinterschnitte aufweist, um das erste Gehäuseteil am zweiten Gehäuseteil zu positionieren. Das zweite Gehäuseteil kann somit zum Verschließen der Aufnahme, vorzugsweise einseitig unter den Hinterschnitten verklemmt und danach nach unten zum ersten Gehäuseteil abgesenkt bzw. verschwenkt werden. Die Hinterschnitte ermöglichen somit einen einfachen Zusammenbau des Türgriffmoduls, bei dem jeder Schritt intuitiv durch die Elemente des Türgriffmoduls vorgegeben werden.

Ferner kann die Erfindung vorsehen, dass ein Anschlusselement, insbesondere in Form eines Kabels mit einem ersten Stecker, insbesondere in Form eines MolexO-Steckers, zum Anschließen an der Elektronikeinheit und einem zweiten Stecker zum Anschließen am Sicherheitssystem des Fahrzeuges, vorgesehen ist. Über das Anschlusselement kann vorteilhafterweise Energie und/oder Daten zwischen der Elektronikeinheit und dem fahrzeugseitigen Sicherheitssystem übertragen werden. Das Kabel kann bspw. in Form eines Datenbusses ausgebildet sein, um eine Kommunikation und/oder einen Datenaustausch zwischen der Elektronikeinheit und dem fahrzeugseitigen Sicherheitssystem zu ermöglichen.

Weiterhin kann im Rahmen der Erfindung bei einem Türgriffmodul vorgesehen sein, dass ein Anschlusselement, insbesondere an einem zweiten Stecker, eine Clipführung aufweist, um das Anschlusselement am Fahrzeug, vorzugsweise an einem komplementär dazu ausgebildeten Montageclip des Fahrzeuges, zu fixieren, und/oder dass mindestens ein Führungsclip für ein Anschlusselement, insbesondere für ein Kabel des Anschlusselementes, vorgesehen ist, um das Anschlusselement, vorzugsweise das Kabel des Anschlusselementes, am Fahrzeug zu positionieren. Die Clipführung und der Montageclip können in der Nähe des Sicherheitssystems angeordnet werden. Ein oder mehrere Führungsclips können nach Bedarf entlang des Kabels eingesetzt werden. Somit kann die Erfindung einen kompletten Bausatz bereitstellen, mit dem nicht nur das Türgriffmodul an der Griffvorrichtung befestigt, sondern auch das Anschlusselement einfach und bequem am Fahrzeug verlegt und bis hin zum Sicherheitssystem geführt werden kann.

Des Weiteren kann im Rahmen der Erfindung bei einem Türgriffmodul vorgesehen sein, dass ein, insbesondere separater, Befestigungsadapter zum Einsetzten von einer Innenseite der Griffvorrichtung vorgesehen ist. Mithilfe des Befestigungsadapters kann ein abgeschlossenes Gehäuse des Türgriffmoduls von einer Außenseite der Griffvorrichtung angeordnet werden, wobei zum Befestigen des Türgriffmoduls nur der Befestigungsadapter von der Innenseite der Griffvorrichtung angeordnet werden muss.

Zudem kann die Erfindung bei einem Türgriffmodul vorsehen, dass am Gehäuse ein Verbindungselement zum Einsetzen von einer Außenseite der Griffvorrichtung vorgesehen ist, welches insbesondere materialeinheitlich und/oder monolithisch mit dem Gehäuse ausgebildet sein kann. Somit kann ein komplementäres Element zum Befestigungsadapter bereitgestellt werden, um eine Verbindung zwischen dem Gehäuse und dem Befestigungsadapter herzustellen. Dazwischen kann sich eine Außenschale der Griffmulde oder der Außenschale der Griffvorrichtung erstrecken, die zwischen dem Befestigungsadapter und dem Gehäuse des Türgriffmoduls eingeklemmt werden kann.

Außerdem ist es im Rahmen der Erfindung denkbar, dass das Türgriffmodul über eine Verbindung eines gehäuseseitigen Verbindungselementes mit einem, vorzugsweise separaten, Befestigungsadapter an der Griffvorrichtung befestigbar ist. Somit kann der Vorteil erreicht werden, dass keine Zusammenwirkung des erfindungsgemäßen Türgriffmoduls mit der Griffmulde oder der Außenschale der Griffvorrichtung erforderlich ist, um die Elektronikeinheit geschützt unterzubringen. Vielmehr kann ein bereits abgeschlossenes und abgedichtetes Gehäuse des Türgriffmoduls an der Griffvorrichtung befestigt werden. Hierzu kann das Türgriffmodul an einer Montageaufnahme der Griffvorrichtung, bspw. einer Schließzylinderaufnahme, vorzugsweise anstatt des Schließzylinders, eingesetzt werden und von innen mit dem Befestigungsadapter befestigt werden. Vorteilhafterweise können der Befestigungsadapter und das Verbindungselement zumindest bereichsweise zylinderförmig ausgebildet sein und koaxial ineinander eingesetzt werden, um ebenfalls koaxial durch eine Modulaufnahme der Griffvorrichtung eingeführt zu werden.

Ferner kann die Erfindung vorsehen, dass ein, vorzugsweise separater, Befestigungsadapter zum Herstellen mindestens einer form- und/oder kraftschlüssigen Verbindung, einer Steck-Dreh-Verbindung, eines Bajonettverschlusses, eines Schraubverschlusses oder eines Rastverschlusses, mit einem gehäuseseitigen Verbindungselement ausgebildet ist. Dadurch kann eine einfache und schnelle Montage des Türgriffmoduls an der Griffvorrichtung ermöglicht werden.

Weiterhin ist es denkbar, dass ein, vorzugsweise separater, Befestigungsadapter einen, insbesondere zumindest abschnittsweise zylindrischen, Führungsabschnitt aufweist, welcher in einer Modulaufnahme, vorzugsweise in einer Schließzylinderaufnahme, der Griffvorrichtung aufnehmbar ist, und/oder dass ein, vorzugsweise separater, Befestigungsadapter geometrisch komplementär zu einer Modulaufnahme, insbesondere zu einer Schließzylinderaufnahme, der Griffvorrichtung ausgebildet ist. Vorteilhafterweise kann dadurch eine bereits vorhandene Modulaufnahme an der Griffvorrichtung genutzt werden, um das Türgriffmodul daran zu befestigen. Somit braucht die vorhandene Griffvorrichtung nicht umgebaut werden, und die Aufrüstung der Griffvorrichtung kann kostengünstig sowie mit wenig Aufwand erfolgen.

Des Weiteren kann im Rahmen der Erfindung bei einem Türgriffmodul vorgesehen sein, dass ein, vorzugsweise separater, Befestigungsadapter, insbesondere innerhalb eines Führungsabschnitts, ein, vorzugsweise im Wesentlichen ringförmiges, Aufnahmeelement aufweist, der derart ausgebildet ist, um eine Verbindung eines gehäuseseitigen Verbindungselementes mit dem Befestigungsadapter in nur einer vorgegebenen Ausrichtung des Verbindungselementes zum Befestigungsadapter zu ermöglichen. Somit kann die Richtigkeit der Montage gewährleistet werden und der Monteur darüber eine haptische Rückmeldung erhalten.

Zudem ist es möglich, dass ein, vorzugsweise separater, Befestigungsadapter, insbesondere an einem Aufnahmeelement, mindestens ein, vorzugsweise nutförmiges, Aufnahmemittel für ein, vorzugsweise nockenförmiges, Positioniermittel an einem gehäuseseitigen Verbindungselement aufweist. Wenn die Positioniermittel in die Aufnahmemittel eingreifen, kann das Verbindungselement in den Befestigungsadapter eingesteckt werden. Somit kann die Verbindung eines gehäuseseitigen Verbindungselementes mit dem Befestigungsadapter in nur einer vorgegebenen Ausrichtung des Verbindungselementes zum Befestigungsadapter ermöglicht werden.

Außerdem kann ein, vorzugsweise separater, Befestigungsadapter im Rahmen der Erfindung zumindest einen, insbesondere außenseitig an einem Führungsabschnitt abstehenden, Befestigungsarm aufweisen, um den Befestigungsadapter an der Griffvorrichtung form- und/oder kraftschlüssig zu befestigen, und/oder dass ein, vorzugsweise separater, Befestigungsadapter, insbesondere an einem Befestigungsarm, ein Befestigungsmittel, bevorzugt in Form einer Aufnahmeöffnung für eine Schraube oder in Form eines Rastelementes für ein komplementäres Gegenrastelement der Griffvorrichtung, aufweist. Somit kann der Befestigungsadapter von der Innenseite der Griffvorrichtung einfach und bequem befestigt werden, wodurch das Türgriffmodul verlierfest an der Griffvorrichtung befestigt wird.

Ferner kann ein, vorzugsweise separater, Befestigungsadapter im Rahmen eines erfindungsgemäßen Türgriffmoduls mindestens ein, insbesondere außenseitig an einem Führungsabschnitt abstehendes, Zugentlastungselement für ein Anschlusselement, insbesondere für ein Kabel des Anschlusselementes, aufweisen. Somit kann das Anschlusselement zuverlässig an der Elektronikeinheit angeschlossen werden, ohne die Gefahr entstehen zu lassen, dass Zugkräfte an die Verbindungsstellen zur Elektronikeinheit weitergeleitet werden und die Verbindung des Anschlusselementes mit der Elektronikeinheit unterbrochen oder gelöst wird.

Weiterhin kann im Rahmen der Erfindung bei einem Türgriffmodul vorgesehen sein, dass ein gehäuseseitiges Verbindungselement einen, insbesondere zumindest abschnittsweise zylindrischen, Führungskörper aufweist, welches in einem Befestigungsadapter, insbesondere innerhalb eines Führungsabschnitts, aufnehmbar ist, und/oder dass ein gehäuseseitiges Verbindungselement geometrisch komplementär zu einem, vorzugsweise separaten, Befestigungsadapter ausgebildet ist. Somit kann eine einfache und schnelle Montage des Türgriffmoduls an der Griffvorrichtung ermöglicht werden.

Des Weiteren kann die Erfindung bei einem Türgriffmodul vorsehen, dass ein gehäuseseitiges Verbindungselement, insbesondere außenseitig, mindestens ein, vorzugsweise nockenförmiges, Positioniermittel aufweist, welches mit einem Aufnahmeelement, insbesondere mit einem nutförmigen Aufnahmemittel, an einem, vorzugsweise separaten, Befestigungsadapter in eine mechanische Wirkverbindung bringbar ist, um die Verbindung des Verbindungselementes mit dem Befestigungsadapter in nur einer vorgegebenen Ausrichtung des Verbindungselementes zum Befestigungsadapter zu ermöglichen. Somit kann ein Einstecken des Verbindungselementes in den Befestigungsadapter ermöglicht werden. Weiterhin kann dadurch ein Verdrehen des Befestigungsadapters bezüglich des Verbindungselementes ermöglicht werden, um eine Steck-Dreh-Verbindung zwischen dem Verbindungselement und dem Befestigungsadapter herzustellen.

Ferner wird die erfindungsgemäße Aufgabe durch ein Verfahren zum Montieren eines Türgriffmoduls an einer Griffvorrichtung eines beweglichen Teil eines Fahrzeugs, insbesondere eines Nutzfahrzeugs, gelöst, wobei das Türgriffmodul zum Austauschen von Daten mit einer fahrzeugexternen Kommunikationseinheit und zum Steuern eines Sicherheitssystems des Fahrzeuges, insbesondere wie oben beschrieben, ausgebildet ist, wobei ein Gehäuse des Türgriffmoduls an einer Außenseite der Griffvorrichtung fixiert und durch einen Befestigungsadapter von einer Innenseite der Griffvorrichtung an der Griffvorrichtung befestigt wird. Somit kann ein bereits abgeschlossenes und abgedichtetes Gehäuse an der Außenseite der Griffvorrichtung positioniert werden, in dem die Elektronikeinheit geschützt vor Witterungseinflüssen und vor mechanischen Einwirkungen untergebracht werden kann. Zum Befestigen des Gehäuses des Türgriffmoduls braucht nur noch der Befestigungsadapter von der Innenseite der Griffvorrichtung positioniert und mit dem Gehäuse des Türgriffmoduls befestigt werden. Dadurch kann eine einfache und schnelle Montage des Türgriffmoduls an der Griffvorrichtung ermöglicht werden. Weiterhin werden mithilfe des erfindungsgemäßen Verfahrens zum Montieren des Türgriffmoduls an der Griffvorrichtung die gleichen Vorteile erreicht, die oben im Zusammenhang mit dem erfindungsgemäßen Türgriffmodul beschrieben wurden. Auf diese Vorteile wird vorliegend vollumfänglich Bezug genommen.

Weiterhin kann die Erfindung bei einem Verfahren zum Montieren des Türgriffmoduls an der Griffvorrichtung vorsehen, dass das Türgriffmodul durch Herstellen einer form- und/oder kraftschlüssigen Verbindung, insbesondere einer Steck-Dreh-Verbindung, vorzugsweise eines Bajonettverschlusses, Schraubverschlusses oder Rastverschlusses, eines, insbesondere materialeinheitlich und/oder monolithisch mit dem Gehäuse ausgebildeten, Verbindungselementes des Gehäuses mit dem Befestigungsadapter an der Griffvorrichtung befestigt wird. Die Montage des Türgriffmoduls an der Griffvorrichtung kann somit einfach und in nur wenigen Schritten erfolgen.

Des Weiteren wird die erfindungsgemäße Aufgabe durch ein Verfahren zum Herstellen eines Türgriffmoduls für eine Griffvorrichtung eines beweglichen Teils eines Fahrzeugs, insbesondere eines Nutzfahrzeugs, gelöst, wobei das Türgriffmodul zum Austauschen von Daten mit einer fahrzeugexternen Kommunikationseinheit und zum Steuern eines Sicherheitssystems des Fahrzeuges, insbesondere wie oben beschrieben, ausgebildet ist, wobei ein Gehäuse für das Türgriffmodul bereitgestellt wird, in welchem eine, insbesondere abgeschlossene, vorzugsweise abgedichtete, Aufnahme mit einer Elektronikeinheit zum Steuern des Sicherheitssystems des Fahrzeuges ausgebildet wird, wobei die Elektronikeinheit mindestens ein Kommunikationselement zum Austauschen von Daten mit einer fahrzeugexternen Kommunikationseinheit aufweist. Mithilfe des Verfahrens zum Herstellen des Türgriffmoduls für die Griffvorrichtung werden die gleichen Vorteile erreicht, die und/oben im Zusammenhang mit dem erfindungsgemäßen Türgriffmodul und/oder dem Verfahren zum Montieren eines entsprechenden Türgriffmoduls an einer Griffvorrichtung beschrieben wurden, auf die vorliegend vollumfänglich Bezug genommen wird.

Ein Verfahren zum Herstellen eines Türgriffmoduls für eine Griffvorrichtung kann zudem im Sinne der Erfindung mindestens einen der folgenden Schritte aufweisen:
a) Montieren der Elektronikeinheit an einem zweiten Gehäuseteil des Gehäuses,
b) Einführen eines ersten Steckers eines Anschlusselementes durch ein Verbindungselement an einem zweiten Gehäuseteil des Gehäuses, oder
c) Anschließen, insbesondere Verlöten, eines ersten Steckers eines Anschlusselementes an der Elektronikeinheit.

Durch den Schritt a) kann eine verlierfeste Befestigung der Elektronikeinheit am Gehäuse, insbesondere in der Aufnahme des Gehäuses ermöglicht werden. Durch den Schritt b) kann ein elektrischer und ein Daten-Anschluss an die Elektronikeinheit bereitgestellt werden, der nach innen des Fahrzeuges bis hin zum Sicherheitssystem des Fahrzeuges verlegt werden kann. Durch den Schritt c) kann eine übertragungssichere und dauerhafte Anbindung des Anschlusselementes an die Elektronikeinheit ermöglicht werden.

Ferner ist es denkbar, dass ein Verfahren zum Herstellen eines Türgriffmoduls für eine Griffvorrichtung mindestens einen weiteren Schritt aufweist:
d) Befestigen eines ersten Gehäuseteils des Gehäuses an einem zweiten Gehäuseteil des Gehäuses, um die Aufnahme für die Elektronikeinheit bereitzustellen.

Durch zwei Gehäuseteile kann ein besonders flaches Türgriffmodul bereitgestellt werden, in dem die Elektronikeinheit, bspw. in Form einer Platine untergebracht werden kann. Ein flaches Türgriffmodul kann besonders elegant und sicher an die geometrischen und aerodynamischen Eigenschaften der Griffvorrichtung angepasst werden, um bei Fahrtwind zuverlässig an der Griffvorrichtung zu verbleiben und keine unangenehmen Klappergeräusche zu erzeugen.

Weiterhin ist es im Rahmen der Erfindung möglich, dass ein Verfahren zum Herstellen eines Türgriffmoduls für eine Griffvorrichtung mindestens einen weiteren Schritt aufweist:
e) Auffüllen der Aufnahme mit einer Vergussmasse, um mindestens die Elektronikeinheit oder einen ersten Stecker eines Anschlusselementes abzudichten.

Somit können die elektrischen und elektronischen Komponenten der Elektronikeinheit von allen Seiten zuverlässig abgedichtet werden.

Des Weiteren wird die erfindungsgemäße Aufgabe durch Verfahren zum Bereitstellen eines Türgriffmoduls für eine Griffvorrichtung eines beweglichen Teils eines Fahrzeugs, insbesondere eines Nutzfahrzeugs, gelöst, wobei das Türgriffmodul zum Austauschen von Daten mit einer fahrzeugexternen Kommunikationseinheit und zum Steuern eines Sicherheitssystems des Fahrzeuges, insbesondere wie oben beschrieben, ausgebildet ist, wobei das Verfahren mindestens einen Schritt eines oben beschriebenen Verfahrens zum Herstellen des Türgriffmoduls und/oder mindestens einen Schritt eines oben beschriebenen Verfahrens zum Montieren des Türgriffmoduls an der Griffvorrichtung umfasst. Mithilfe des Verfahrens zum Bereitstellen des Türgriffmoduls für die Griffvorrichtung werden die gleichen Vorteile erreicht, die und/oben im Zusammenhang mit dem erfindungsgemäßen Türgriffmodul und/oder den Verfahren zum Montieren und/oder Herstellen eines entsprechenden Türgriffmoduls an einer Griffvorrichtung beschrieben wurden, auf die vorliegend vollumfänglich Bezug genommen wird.

Weitere, die Erfindung verbessernde Maßnahmen ergeben sich aus der nachfolgenden Beschreibung von Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumliche Anordnung und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken.

Es zeigen:
- Figur 1: ein erfindungsgemäßes Türgriffmodul in einer Explosionsansicht,
- Figur 2: ein zweites Gehäuseteil eines erfindungsgemäßen Türgriffmoduls,
- Figur 3: ein erstes Gehäuseteil eines erfindungsgemäßen Türgriffmoduls,
- Figur 4: einen Befestigungsadapter eines erfindungsgemäßen Türgriffmoduls,
- Figur 5: ein Fahrzeug mit einem erfindungsgemäßen Türgriffmodul,
- Figur 6a: eine Griffvorrichtung mit einer Modulaufnahme,
- Figur 6b: eine Griffvorrichtung mit einem erfindungsgemäßen Türgriffmodul,
- Figur 7: ein erstes Gehäuseteil des erfindungsgemäßen Türgriffmoduls mit einer eingesetzten Elektronikeinheit,
- Figur 8: Zusammensetzten eines ersten Gehäuseteils und eines zweiten Gehäuseteils eines erfindungsgemäßen Türgriffmoduls,
- Figur 9: Auffüllen einer Aufnahme zwischen einem ersten Gehäuseteil und einem zweiten Gehäuseteil eines erfindungsgemäßen Türgriffmoduls mit einer Vergussmasse,
- Figur 10: ein erfindungsgemäßes Türgriffmodul in einem befestigten Zustand an einer Griffvorrichtung in einer Ansicht von einer Innenseite der Griffvorrichtung,
- Figur 11a: ein zweiter Stecker eines Anschlusselementes mit einer Clipführung,
- Figur 11b: ein Montageclip für eine Clipführung an einem zweiten Stecker eines Anschlusselementes, und
- Figur 12: ein zweiter Stecker eines Anschlusselementes mit einer Clipführung im Zusammengriff mit einem Montageclip.

In den nachfolgenden Figuren werden für die gleichen technischen Merkmale auch für unterschiedliche Ausführungsbeispiele die identischen Bezugszeichen verwendet.

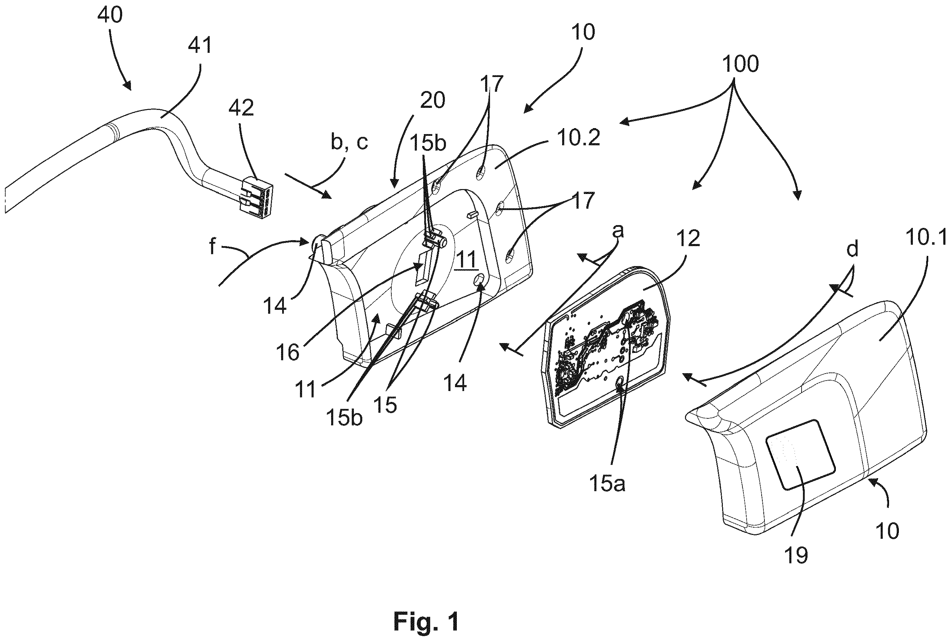

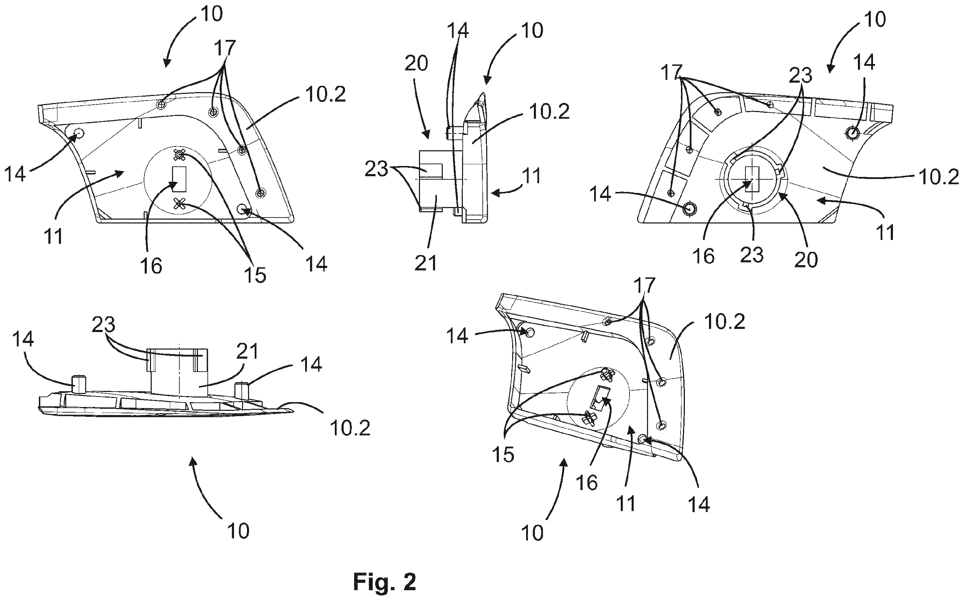

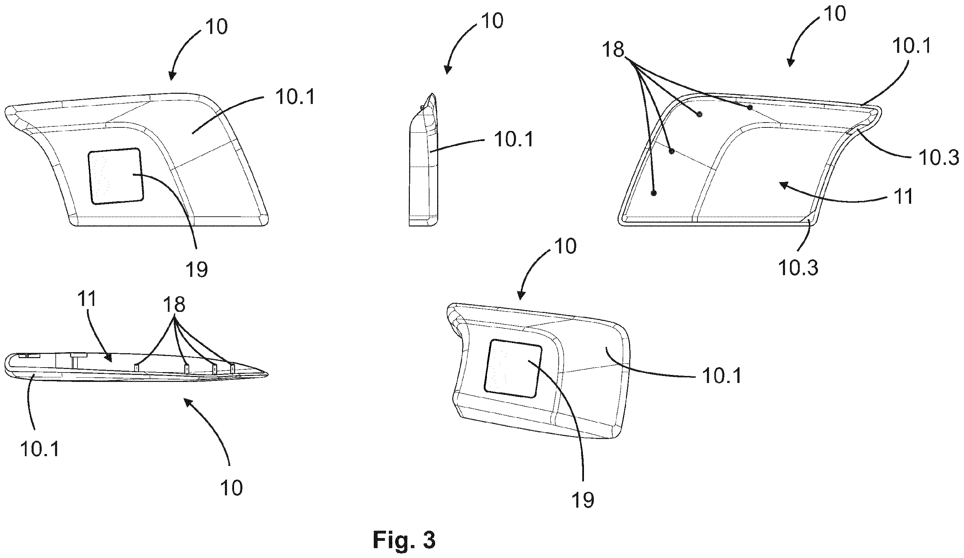

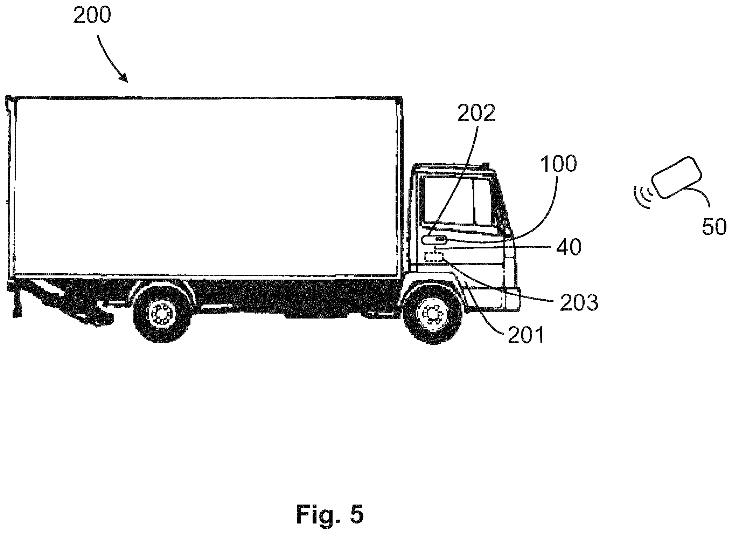

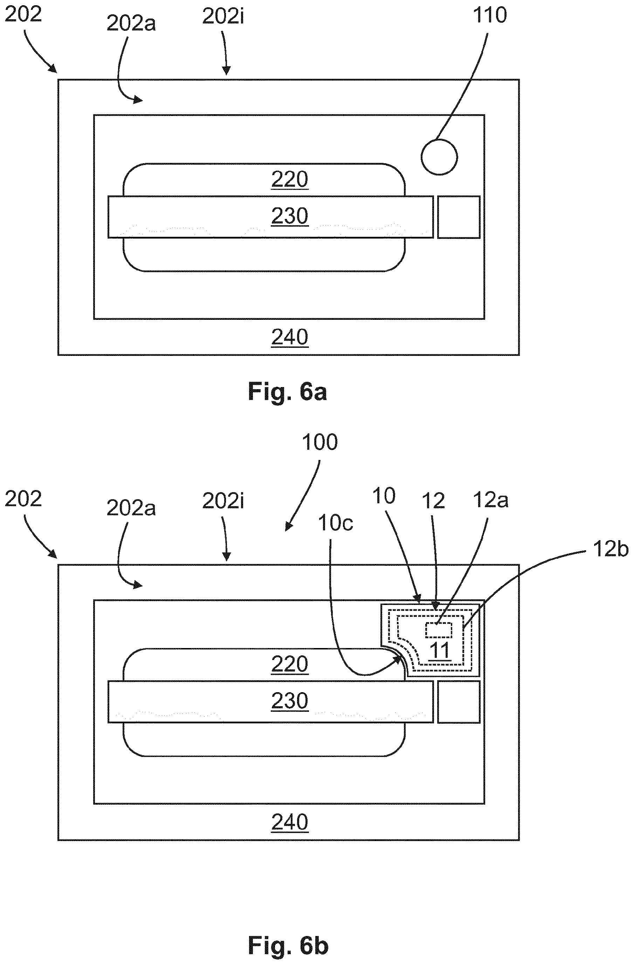

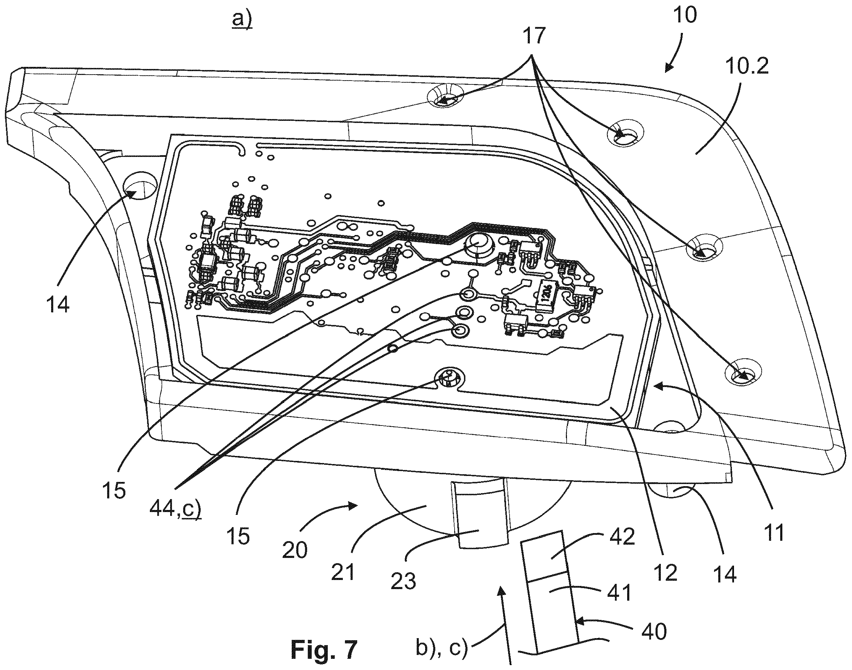

Die Figur 1 zeigt ein erfindungsgemäßes Türgriffmodul 100 vor dem Zusammenbau zu einem einsatzfertigen Modul an einer Griffvorrichtung 202 eines beweglichen Teils 201 eines Fahrzeuges 200, vorzugsweise eines Nutzfahrzeuges, welches im Nachfolgenden in der Figur 5 schematisch gezeigt wird. Das Türgriffmodul 100 zeichnet sich dadurch aus, dass es ein Gehäuse 10 umfasst, in welchem eine Elektronikeinheit 12 komplett aufgenommen wird. Das Gehäuse 10 kann bspw. zweiteilig mit einem ersten Gehäuseteil 10.1 (s. Figur 3) und einem zweiten Gehäuseteil 10.2 (s. Figur 2) ausgebildet sein. Im Gehäuse 10 ist eine Aufnahme 11 ausgebildet, um die Elektronikeinheit 12 aufzunehmen. Gleichwohl ist es aber denkbar, dass das Gehäuse 10 einteilig sein und eine Öffnung aufweisen kann, durch welche die Elektronikeinheit 12 in die Aufnahme 11 eingeschoben werden kann. Die Aufnahme 11 kann relativ flach sein, um darin die Elektronikeinheit 12 in Form einer Platine unterzubringen (s. Figuren 1, 2 und 7). Hierzu können bspw. zwei Aufnahmepins 15 innenseitig am zweiten Gehäuseteil 10.2 vorgesehen sein, die in speziell ausgebildete Öffnungen 15a an der Platine der Elektronikeinheit 12 eingreifen können. Die Elektronikeinheit 12 kann mithilfe der Aufnahmepins 15 am zweiten Gehäuseteil 10.2 heißverstemmt werden, um die Elektronikeinheit 12 verliersicher am Gehäuse 10, ggf. über einigen Abstandselementen 15b an den Aufnahmepins 15, anzuordnen (Herstellungs-Schritt a), welcher anhand der Figur 7 erklärt wird). Das erfindungsgemäße Gehäuse 10 bildet vorzugsweise eine abgeschlossene und abgedichtete Aufnahme 11 für die Elektronikeinheit 12, in welcher die Elektronikeinheit 12 gegen witterungstechnische und mechanische Einflüsse zuverlässig geschützt ist. An einer außenliegenden Seite des ersten Gehäuseteils 10.1 kann ein Betätigungsabschnitt 19 vorgesehen sein, welcher die Position eines drahtlosen Kommunikationselementes 12b an der Elektronikeinheit 12 andeuten kann, welches in der Figur 6b angedeutet ist. Das drahtlose Kommunikationselement 12b soll die Funktionen der Griffvorrichtung 202 verbessern, um eine drahtlose Betätigung eines Sicherheitssystems 203 des Fahrzeuges 200 zu ermöglichen, um bspw. ein Schloss des beweglichen Teils 201 schlüssellos zu entriegeln (s. Figur 5).

Die Elektronikeinheit 12 dient erfindungsgemäß dazu, eine kabellose Kommunikationsfähigkeit einer fahrzeugexternen Kommunikationseinheit 50 und der Griffvorrichtung 202 des beweglichen Teils 201 des Fahrzeuges 200 bereitzustellen. Die fahrzeugexterne Kommunikationseinheit 50 kann bspw. in Form eines ID-Gebers, eines Smartphones oder dergleichen ausgebildet sein. Von der fahrzeugexternen Kommunikationseinheit 50 kann die Elektronikeinheit 12 Daten, bspw. Identifikationsdaten, empfangen und an das Sicherheitssystem 203, z. B. in Form eines Zugangskontrollsystems, weiterleiten. Nach einer verifizierten Berechtigung eines Benutzers durch die fahrzeugexterne Kommunikationseinheit 50 beim fahrzeugseitigen Sicherheitssystem 203 kann die Elektronikeinheit 12, bspw. über das Sicherheitssystem 203 des Fahrzeuges 200, eine Betätigung eines Schlosses des beweglichen Teils 201 veranlassen, um das bewegliche Teil 201 zu entriegeln, wodurch das bewegliche Teil 201 zum Öffnen mittels der Griffvorrichtung 202 freigeben wird. Denkbar ist, dass mittels des erfindungsgemäßen Türgriffmoduls 100 eine Fernsteuerung des Sicherheitssystems 203 in Form eines Keyless-Go- oder eines Keyless-Entry-Systems ermöglicht wird. Dadurch kann der Komfort beim Bedienen des Sicherheitssystems 203 modernisiert werden. Zudem kann durch das erfindungsgemäße Türgriffmodul 100 die Sicherheit beim Bedienen des Sicherheitssystems 203 verbessert werden.

Darüber hinaus kann die Elektronikeinheit 12 zur Speicherung von Fahrdaten, bspw. einem Fahrtenbuch, Benutzerprofilen oder verschleißbezogenen Fahrzeugdaten dienen, um die vorhandenen Funktionen im Fahrzeug 200 zu erweitern.

Anschließend wird durch eine Anschlussöffnung 16 im zweiten Gehäuseteil 10.2 ein Anschlusselement 40 in Form eines Kabels 41 mit einem ersten Stecker 42, bspw. in Form eines MolexO-Steckers, zu Elektronikeinheit 12 geführt (Herstellungs-Schritt b), welcher anhand der Figur 7 erklärt wird) und an der Elektronikeinheit 12 angeschlossen, insbesondere verlötet (Herstellungs-Schritt c), welcher anhand der Figur 7 erklärt wird).

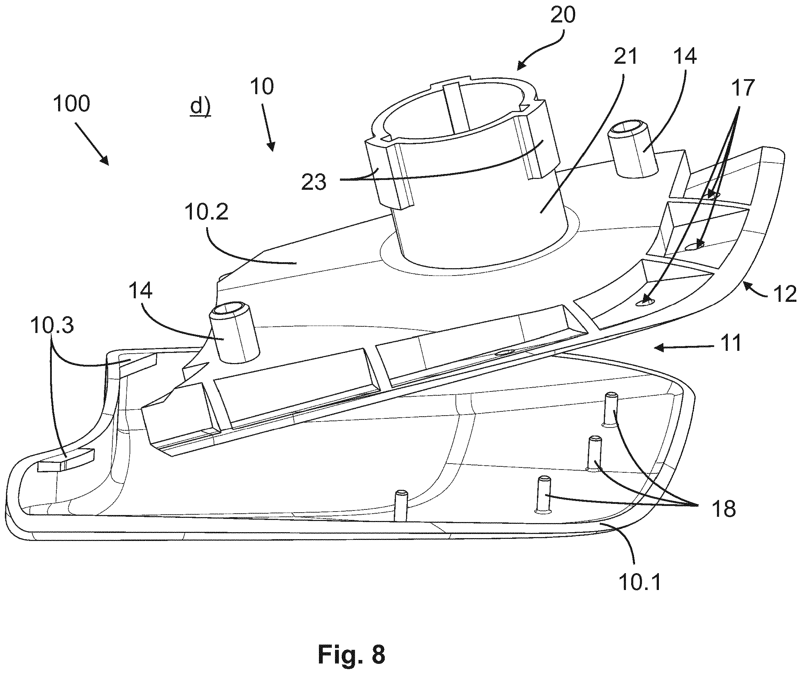

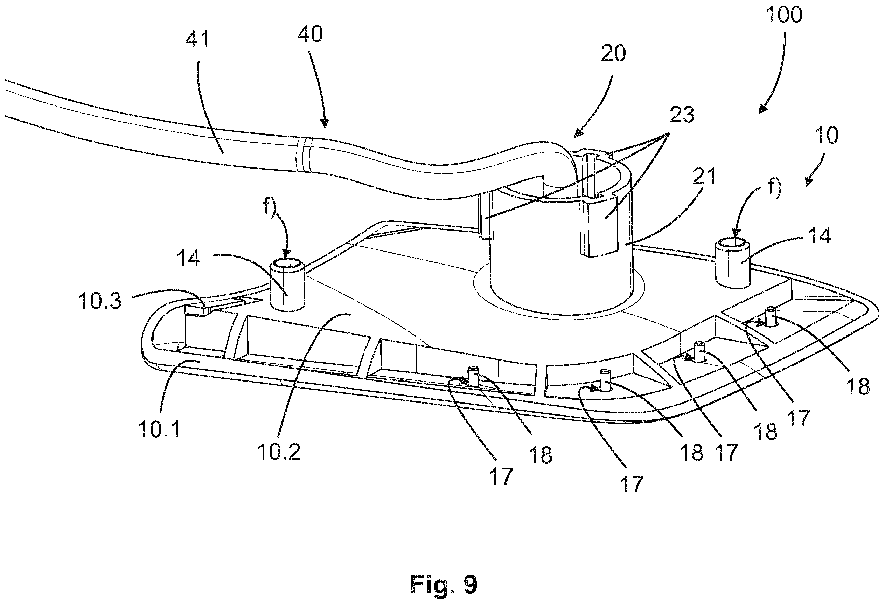

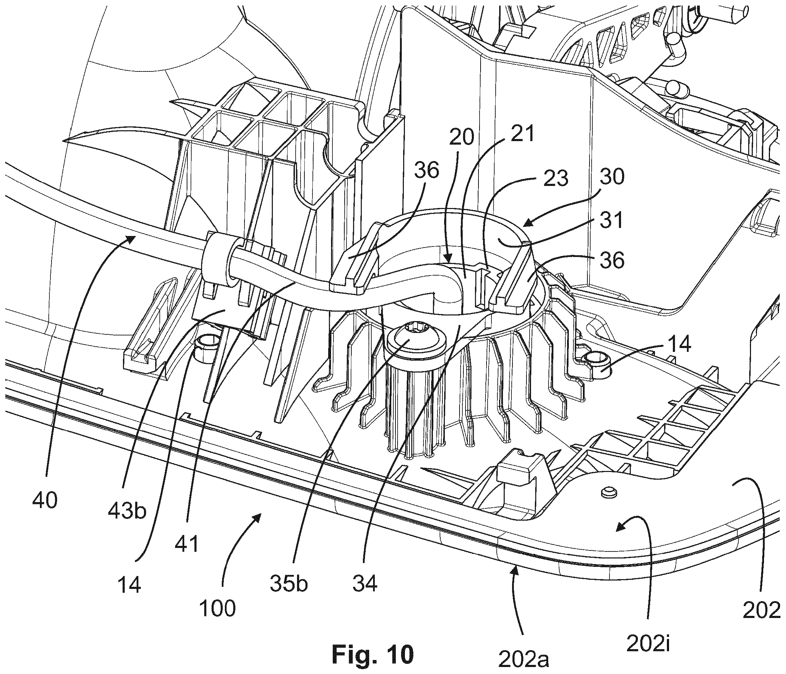

Die beiden Gehäuseteile 10.1, 10.2 können mittels Verbindungsöffnungen 17 am zweiten Gehäuseteil 10.2 und Verbindungsstifte 18 am ersten Gehäuseteil 10.1 verbunden und bspw. heißverklemmt werden, wie es die Figur 8 andeutet (Herstellungs-Schritt d), welcher anhand der Figur 8 erklärt wird). Außerdem ist es denkbar, dass die Verbindungsöffnungen 17 und die Verbindungsstifte 18 als korrespondierende Befestigungselemente, bspw. Rastelemente, ausgebildet sein können, um die beiden Gehäuseteile 10.1, 10.2 form- und/oder kraftschlüssig miteinander zu befestigen. Zusätzlich können die Gehäuseteile 10.1, 10.2 an einer Verbindungsnaht, bspw. randseitig, verklebt werden. Ferner kann die Aufnahme 11 im Gehäuse 10 mit einer Vergussmasse aufgefüllt werden (Herstellungs-Schritt e), welcher anhand der Figur 9 erklärt wird), wozu zwei Füllstutzen 14 rückseitig am zweiten Gehäuseteil 10.2 vorgesehen sein können, die außerdem zur Zentrierung des Türgriffmoduls 100 an der Griffvorrichtung 202 dienen können, wie es in der Ansicht der Figur 10 verdeutlicht ist.

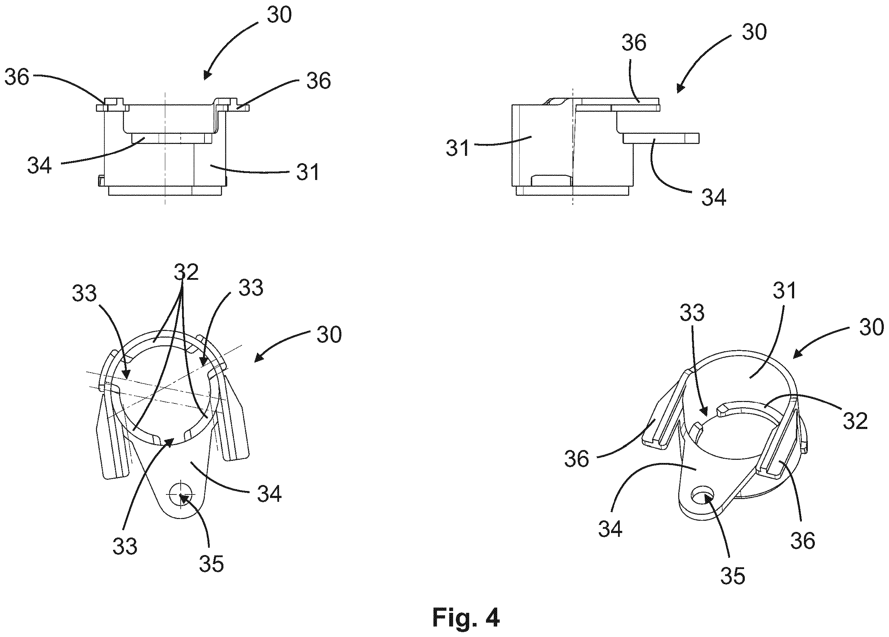

Das zusammengebaute Türgriffmodul 100 wird in den Herstellungs-Schritten a) bis e), auf die im Nachfolgenden anhand der Figuren 7 bis 10 im Detail eingegangen wird, als ein, vorzugsweise komplett abgeschlossenes und abgedichtetes, Nachrüstteil bereitgestellt, welches einfach, bequem und ohne großen Montageaufwand an der Griffvorrichtung 202 montiert werden kann, welche beispielhaft in den Figuren 6a und 6b gezeigt ist. Die Erfindung liefert ein relativ flaches Türgriffmodul 100, um die designtechnischen und aerodynamischen Anforderungen an die Griffvorrichtung 202 nicht zu stören. Die Befestigung des erfindungsgemäßen Türgriffmoduls 100 an der Griffvorrichtung 202 dient ein Befestigungsadapter 30, welcher in den Figuren 4 und 10 gezeigt ist. Der Befestigungsadapter 30 kann von innen der Griffvorrichtung 202 an dieser eingesetzt werden, um das Türgriffmodul 100 an der Griffvorrichtung 202 zu befestigen, wie es im Nachfolgenden in der Figur 10 gezeigt wird. Hierzu kann ein Bajonettverschluss zwischen dem Befestigungsadapter 30 und einem Verbindungselement 20 an einem zweiten Gehäuseteil 10.2 des Türgriffmoduls 100 hergestellt werden. Dabei können sich der Befestigungsadapter 30 und das Verbindungselement 20 durch eine Montageaufnahme 210, bspw. einer Schließzylinderaufnahme, der Griffvorrichtung 202 erstrecken, die in der Figur 6a gezeigt ist. Der Befestigungsadapter 30 selbst kann innenseitig an der Griffvorrichtung 202 verschraubt werden, wie es die Figur 10 zeigt.

Die Figur 2 zeigt das zweite Gehäuseteil 10.2 in Alleinstellung aus unterschiedlichen Ansichten, nämlich von oben links bis nach unten rechts zuerst von einer Innenseite, dann von einer Schmalseite, von einer Außenseite, von einer Breitseite und in einer perspektivischen Ansicht. Das zweite Gehäuseteil 10.2 weist eine im Wesentlichen flache Form auf mit einer ebenfalls flachen Aufnahme 11, in welcher die Elektronikeinheit 12 in Form einer Platine mit einem aufgesetzten Sensorelement 12a und einem Kommunikationsmittel 12b aufgenommen wird. Zum Befestigen der Elektronikeinheit 12 in der Aufnahme 11 sind Aufnahmepins 15 vorgesehen, die in korrespondierenden Öffnungen 15a an der Platine der Elektronikeinheit 12 aufgenommen werden können (Herstellungs-Schritt a), der in der Figur 7 gezeigt ist). Die äußeren Spitzen der Aufnahmepins 15 können zum Heißverstemmen der Elektronikeinheit 12 am zweiten Gehäuseteil 10.2 dienen, wodurch die Elektronikeinheit 12 am zweiten Gehäuseteil 10.2 verlierfest befestigt wird. Die unteren Ansätze der Aufnahmepins 15 können rippenartige, abstehende Abstandselemente 15b aufweisen, um die Elektronikeinheit 12 in einem vorgegebenen Abstand zur Innenseite des zweiten Gehäuseteils 10.2 zu positionieren. Dieser Abstand kann zum Umspritzen der Elektronikeinheit 12 im Herstellungs-Schritt e) genutzt werden, welcher anhand der Figur 9 erklärt wird. Zudem sorgen die Abstandelemente 15b für mehr Stabilität des fertigen Türgriffmoduls 100.

Zudem weist das zweite Gehäuseteil 10.2 eine Anschlussöffnung 16 für das Anschlusselement 40, welche komplementär zum ersten Stecker 42 des Anschlusselementes 40 ausgebildet ist, um den ersten Stecker 42, vorzugsweise spielfrei, aufzunehmen.

Weiterhin sind am zweiten Gehäuseteil 10.2 bspw. zwei nach außen ragende Füllstützen 14 vorgesehen, die einerseits zum Positionieren bzw. Fixieren des Türgriffmoduls 100 an der Griffvorrichtung 202 (s. Figur 10) und andererseits zum Auffüllen der Aufnahme 11 mit der Vergussmasse dienen (s. Herstellungs-Schritt e) in der Figur 9) können.

Ferner weist das zweite Gehäuseteil 10.2 an einem Randabschnitt mehrere Verbindungsöffnungen 17 auf, die zum Verbinden mit den Verbindungsstiften 18 des ersten Gehäuseteils 10.1 dienen können, welches in Alleinstellung in der Figur 3 gezeigt ist. Eine randseitige Anordnung der Verbindungsöffnungen 17 kann dazu dienen, um die beiden Gehäuseteile 10.1, 10.2 beim Herstellen des Türgriffmoduls 100 richtig zueinander zu positionieren.

Außenseitig ist das zweite Gehäuseteil 10.2 mit einem Verbindungselement 20 ausgebildet, welches monolithisch und/oder materialeinheitlich mit dem zweiten Gehäuseteil 10.2 ausgeformt, bspw. in einem Stück gegossen werden kann.

Das Verbindungselement 20 weist einen im Wesentlichen zylindrischen Führungskörper 21 auf, welcher koaxial zu einem und innerhalb eines zylindrischen Führungsabschnittes 31 des Befestigungsadapters 30 bei der Montage des Türgriffmoduls 100 an der Griffvorrichtung 202 aufgenommen werden kann, wie es die Figur 10 zeigt. Der Befestigungsadapter 30 ist im Nachfolgenden in Alleinstellung in der Figur 4 gezeigt.

Radial abstehend vom zylindrischen Führungskörper 21 des Verbindungselementes 20 sind nocken- bzw. vorsprungartige Positioniermittel 23 ausgebildet. Die Positioniermittel 23 können in nutförmige Aufnahmemittel 33 am ringförmigen Aufnahmeelement 32 innerhalb des zylindrischen Führungsabschnittes 31 des Befestigungsadapters 30 eingreifen, wenn das Verbindungselement 20 richtig zum Befestigungsadapter 30 ausgerichtet ist, um eine Steckbewegung des Befestigungsadapters 30 auszuführen. Aufgeschoben auf den zylindrischen Führungskörper 21 des Verbindungselementes 20 kann der Befestigungsadapter 30 verdreht werden, um ein Lösen der Steckverbindung zum Verbindungselement 20 zu verhindern. Die nocken- bzw. vorsprungartige Positioniermittel 23 verlassen die nutförmigen Aufnahmemittel 33 nach dem Einstecken des Befestigungsadapters 30 auf das Verbindungselement 20 und verschieben sich auf dem ringförmigen Aufnahmeelement 32 nach dem Verdrehen des Befestigungsadapters 30 relativ zum Verbindungselement 20. Somit wird eine form- und/oder kraftschlüssige Verbindung nach Art einer Steck-Dreh-Verbindung bzw. eines Bajonettverschlusses zwischen dem Befestigungsadapter 30 und dem Verbindungselement 20 gebildet.

Die Figur 3 zeigt das erste Gehäuseteil 10.1 in mehreren Ansichten, welches die Aufnahme 11 verschließt und nach außen sichtbar an der Griffvorrichtung 202 angeordnet wird. Wie oben bereits erwähnt, weist das erste Gehäuseteil 10.1 mehrere seitlich angeordnete Verbindungsstifte 18 auf zum Verbinden mit den Verbindungsöffnungen 17 am zweiten Gehäuseteil 10.2. Zudem weist das erste Gehäuseteil 10.1 bspw. zwei seitlich angeordnete Hinterschnitte 10.3 auf, unter welche das zweite Gehäuseteil 10.2 zunächst reingeschoben werden kann, um anschließend auf die Verbindungsstifte 18 abgesenkt zu werden, wie es die Figur 8 andeutet. Somit kann im Herstellungs-Schritt d) eine Steck-Schwenk-Bewegung der beiden Gehäuseteile 10.1, 10.2 zueinander ausgeführt werden, um die Aufnahme 11 zu verschließen. Diese Bewegung ist durch die Hinterschnitte 10.3 und die Verbindungsstifte 18 vorgegeben, sodass der Zusammenbau des Türgriffmoduls 100 einfach und sogar intuitiv ausgeführt werden kann.

Außenseitig am ersten Gehäuseteil 10.1 kann ein Betätigungsabschnitt 19 abgebildet sein, um die Position des drahtlosen Kommunikationsmittels 12b an der Elektronikeinheit 12, welches in der Figur 6b gezeigt ist, anzudeuten.

Die Figur 4 zeigt den Befestigungsadapter 30 in mehreren Ansichten. Der Befestigungsadapter 30 weist einen radial vom zylindrischen Führungsabschnitt 31 abstehenden Befestigungsarm 34 mit einem Befestigungsmittel 35 in Form einer Öffnung für eine Schraube 35a auf, um den Befestigungsadapter 30 an einer Innenseite 202i der Griffvorrichtung 202 zu verschrauben (s. Figur 10). Ein Verschrauben des Befestigungsadapters 30 kann stattfinden, nachdem der Befestigungsadapter 30 zwischen der Öffnung der Montageaufnahme 210 an der Griffvorrichtung 202 und der Außenseite des Verbindungselementes 20 reingeschoben und derart verdreht wurde, dass ein Herausziehen des Befestigungsadapters 30 nicht mehr möglich ist. Somit kann eine zuverlässige Befestigung des fertigen und abgeschlossenen Gehäuses 10 des Türgriffmoduls 100 an der Griffvorrichtung 202 ermöglicht werden. Zudem kann der Befestigungsadapter 30 mindestens ein Zugentlastungselement 36 aufweisen, um das Kabel 41 des Anschlusselementes 40 daran zu wickeln und die Zugkräfte aufzunehmen, wie es bspw. die Figur 10 andeutet.

Die Figur 5 zeigt ein Nutzfahrzeug als Beispiel eines Fahrzeuges 200, welches mit dem erfindungsgemäßen Türgriffmodul 100 aufgerüstet werden kann. Insbesondere bei älteren Modellen der Fahrzeuge 200, die über keinen Fernzugang verfügen, kann das erfindungsgemäße Türgriffmodul 100 von Vorteil sein, um eine schlüssellose Betätigung des Sicherheitssystems 203 des Fahrzeuges 200 mittels der externen Kommunikationseinheit 50 zu ermöglichen, um das bewegliche Teil 201, bspw. in Form einer Tür, per Fernzugriff entriegeln zu können.

Die Figuren 6a und 6b zeigen eine beispielhafte Griffvorrichtung 202 mit einer Außenseite 202a, an welcher das Gehäuse 10 des erfindungsgemäßen Türgriffmoduls 100 befestigt werden kann. Die Griffvorrichtung 202 kann eine Griffmulde 220 mit einem dort angeordneten Griff 330 aufweisen, welche an einer Außenschale 240 der Griffvorrichtung 202 ausgebildet ist. Erfindungsgemäß kann es sich bei dem Griff 330 um einen starr oder beweglich ausgebildeten Griff 330 handeln. Des Weiteren weist die Griffvorrichtung 202 eine Modulaufnahme 210 in Form einer Schließzylinderaufnahme auf, an der das erfindungsgemäße Türgriffmodul 100 angeordnet wird. Die Modulaufnahme 210 ist schematisch unterhalb der Außenschale 240 und oberhalb des Griffs 230 und der Griffmulde 220 gezeigt. Das Türgriffmodul 100 weist dabei im Bereich der Griffmulde 220 eine Aussparung 10c auf, um das Türgriffmodul 100 an die Außenkontur der Griffmulde 220 des Griffs 230 anzupassen. Das Türgriffmodul 100 verschließt dabei die Modulaufnahme 210 vollständig und erstreckt sich im Wesentlichen flächenbündig zur Außenschale 240 der Griffvorrichtung 202. Das Gehäuse 10 des Türgriffmoduls 100 kann derart ein- bzw. durchgefärbt sein, dass farblich kein Unterschied zu der Außenschale 240, des Griffs 230 und der Türgriffmulde 220 besteht.

Innerhalb des Gehäuses 10 des Türgriffmoduls 100 ist die Elektronikeinheit 12 angeordnet sein. Die Elektronikeinheit 12 kann ein Sensorelement 12a als ein Kommunikationselement 12a aufweisen, welches als ein Näherungssensor, bspw. ein kapazitiver Sensor ausgebildet sein kann. Das Sensorelement 12a kann dazu dienen, eine Annäherung eines Benutzers an das Türgriffmodul 100 zu detektieren, um die Elektronikeinheit 12 für eine Datenkommunikation mit der fahrzeugexternen Kommunikationseinheit 50 zu wecken, die in der Figur 5 beispielhaft gezeigt ist. Zudem kann die Elektronikeinheit 12 ein drahtloses Kommunikationselement 12b aufweisen, welches als ein NFC-Kommunikationselement ausgebildet sein kann, um eine Kommunikation des Sicherheitssystems 203 des Fahrzeuges 200 und der fahrzeugexternen Kommunikationseinheit 50 sicherzustellen, welche der Benutzer bei sich tragen kann.

Die Figuren 7 bis 9 dienen dazu, die erfindungsgemäßen Schritte a) bis e) zum Herstellen eines Türgriffmoduls 100 zu verdeutlichen, welches wie oben beschrieben ausgebildet sein kann.

Wie es die Figur 7 zeigt, können zunächst folgende Schritte zum Herstellen des Türgriffmoduls 100 vorgesehen sein:
a) Montieren der Elektronikeinheit 12 am zweiten Gehäuseteil 10.2 des Gehäuses 10,
b) Einführen des ersten Steckers 42 des Anschlusselementes 40 durch das Verbindungselement 20 am zweiten Gehäuseteil 10.2 des Gehäuses 10,
c) Anschließen, insbesondere Verlöten, des ersten Steckers 42 des Anschlusselementes 40 an der Elektronikeinheit 12.

Zum Verlöten des ersten Steckers 42 an der Elektronikeinheit 12 sind Kontakte 44 vorgesehen. Wenn die Elektronikeinheit 12 in der Aufnahme 11 befestigt ist und an den ersten Stecker 42 des Anschlusselementes 40 angeschlossen ist, bleibt um die Elektronikeinheit 12 herum Platz, um durch die Füllstützen 14 mit einer Vergussmasse umgossen zu werden. Durch Auffüllen der Aufnahme 11 mit der Vergussmasse können außerdem die Verbindungsstellen zwischen dem ersten Stecker 42 und den Kontakten 44 an der Elektronikeinheit 12 abgesichert und abgedichtet werden.

Die Figur 8 zeigt einen weiteren Schritt zum Herstellen des Türgriffmoduls 100:
d) Befestigen des ersten Gehäuseteils 10.1 des Gehäuses 10 am zweiten Gehäuseteil 10.2 des Gehäuses 10, um die Aufnahme 11 für die Elektronikeinheit 12 bereitzustellen.

Dabei kann das zweite Gehäuseteil 10.2 zunächst unter die Hinterschnitte 10.3 am ersten Gehäuseteil 10.1 reingeschoben werden und danach auf die Verbindungsstifte 18 abgesenkt werden. Somit können die beiden Gehäuseteile 10.1, 10.2 eine Steck-Schwenk-Bewegung zueinander ausführen, um die Aufnahme 11 zu verschließen. Die Anordnung der Hinterschnitte 10.3 und der Verbindungsstifte 18 gibt eine bestimmte Anordnung der beiden Gehäuseteile 10.1, 10.2 zueinander an, in der sie aneinander befestigt werden können. Etwaige Montagefehler können dadurch vermieden werden.

Die Figur 9 deutet einen weiteren Schritt zum Herstellen des Türgriffmoduls 100 an:
e) Auffüllen der Aufnahme 11 mit einer Vergussmasse, um mindestens die Elektronikeinheit 12 oder einen ersten Stecker 42 eines Anschlusselementes 40 abzudichten.

Die Figur 10 zeigt das erfindungsgemäße Türgriffmodul 100 in einem montierten Zustand an der Griffvorrichtung 202 in der Ansicht auf eine Innenseite 202i der Griffvorrichtung 202. Wesentlich ist beim Montieren des erfindungsgemäßen Türgriffmoduls 100, dass das Gehäuse 10 des Türgriffmoduls 100 an der Außenseite 202a der Griffvorrichtung 202 fixiert (s. die Füllstützen 14, die durch entsprechende Öffnungen der Griffvorrichtung 202 durchragen) und durch den Befestigungsadapter 30 von der Innenseite 202i der Griffvorrichtung 202 an der Griffvorrichtung 202 befestigt wird. In einem montierten Zustand des Türgriffmoduls 100 an der Griffvorrichtung 202 erstrecken sich die Modulaufnahme 210, das Verbindungselement 20 und der Befestigungsadapter 30 koaxial zueinander. Nach dem Verbinden des Befestigungsadapters 30 mit dem Verbindungselement 20 kommen das Gehäuse 10 des Türgriffmoduls 100 von der Außenseite 202a der Griffvorrichtung 202 und der Befestigungsarm 34 des Befestigungsadapters 30 von der Innenseite 202i der Griffvorrichtung 202 zur Auflage. Dadurch wird das Türgriffmodul 100 zuverlässig und verliersicher an der Griffvorrichtung 202 montiert.

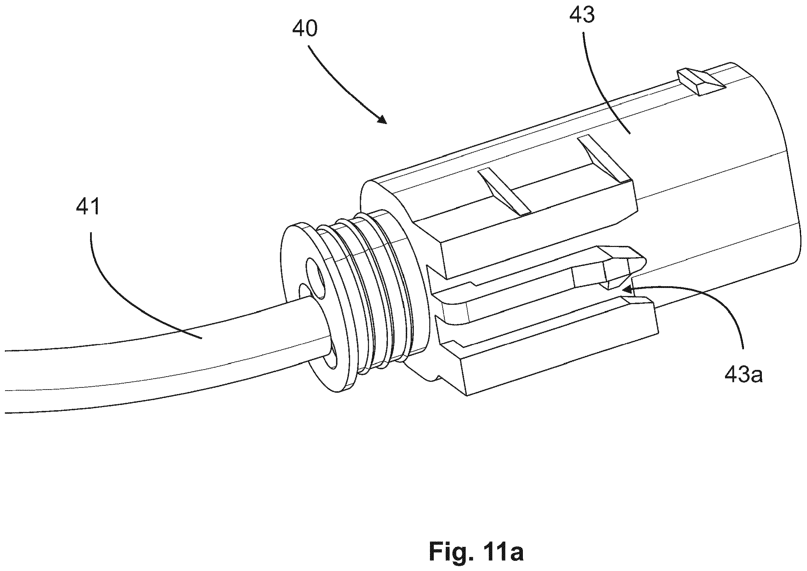

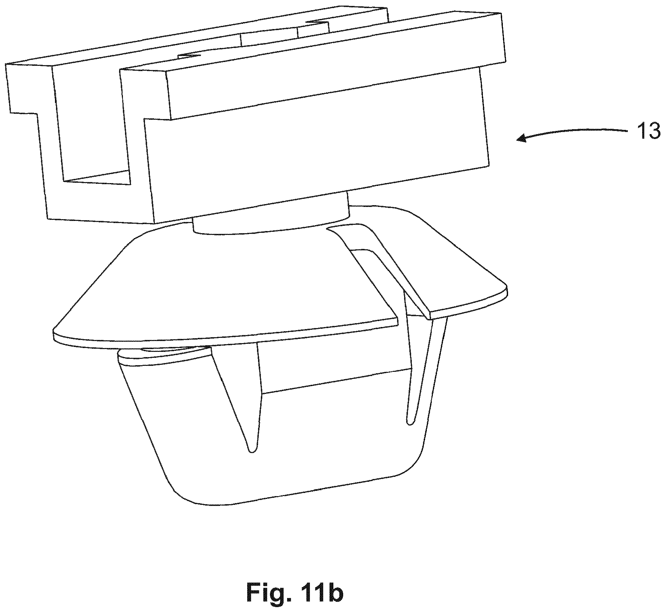

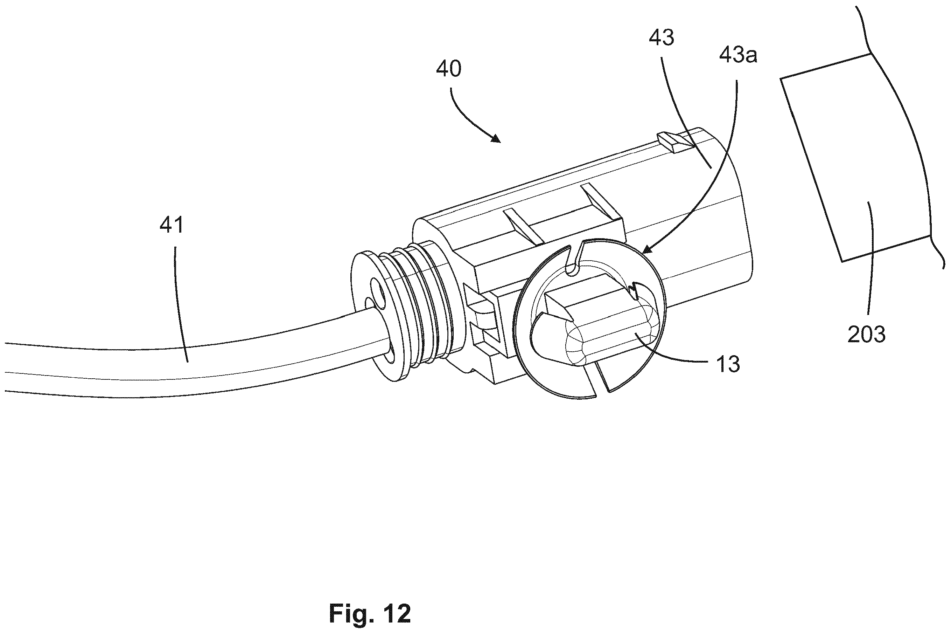

Die Figur 11a zeigt ein Anschlusselement 40 mit einem zweiten Stecker 43 an einem sicherheitssystemseitigen Ende des Anschlusselementes 40. Der zweite Stecker 43 kann eine Clipführung 43a aufweisen, um das Anschlusselement 40 am Fahrzeug 200, vorzugsweise in der Nähe des Sicherheitssystems 203 zu fixieren. Die Figur 11b zeigt einen komplementär zur Clipführung 43a ausgebildeten Montageclip 13, der im Set mit dem erfindungsgemäßen Türgriffmodul 100 bereitgestellt werden kann. Die Figur 12 zeigt die Clipführung 43a im Eingriff mit dem Montageclip 13.

Zudem können ein oder mehrere Führungsclips 43b der Länge nach des Kabels 41 des Anschlusselementes 40 vorgesehen sein, wobei ein beispielhafter Führungsclip 43b in der Figur 10 gezeigt ist. Zusammen mit dem zweiten Stecker 43, dem Montageclip 13 und den Führungsclips 43b kann ein kompletter Bausatz bereitstellt werden, mit dem das Türgriffmodul 100 an der Griffvorrichtung 202 befestigt und das Anschlusselement 40 einfach und bequem am Fahrzeug 200 verlegt und bis hin zum Sicherheitssystem 203 geführt werden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezuaszeichenliste

- 100: Türgriffmodul

- 10: Gehäuse
- 10.1: erstes Gehäuseteil
- 10.2: zweites Gehäuseteil
- 10.3: Hinterschnitt
- 10c: Aussparung
- 11: Aufnahme
- 12: Elektronikeinheit
- 12a: Sensorelement
- 12b: drahtloses Kommunikationselement
- 13: Montageclip
- 14: Füllstütze
- 15: Aufnahmepin
- 15a: Öffnung für Aufnahmepin
- 15b: Abstandselement
- 16: Anschlussöffnung
- 17: Verbindungsöffnung
- 18: Verbindungsstift
- 19: Betätigungsabschnitt

- 20: Verbindungselement
- 21: Führungskörper
- 23: Positioniermittel

- 30: Befestigungsadapter
- 31: Führungsabschnitt
- 32: Aufnahmeelement
- 33: Aufnahmemittel
- 34: Befestigungsarm
- 35: Befestigungsmittel
- 35a: Schraube
- 36: Zugentlastungselement

- 40: Anschlusselement
- 41: Kabel
- 42: erster Stecker
- 43: zweiter Stecker
- 43a: Clipführung
- 43b: Führungsclip
- 44: Kontakte

- 50: Kommunikationseinheit

- 200: Fahrzeug
- 201: bewegliches Teil
- 202: Griffvorrichtung
- 202a: Außenseite
- 202i: Innenseite
- 203: Sicherheitssystem

- 210: Modulaufnahme
- 220: Griffmulde
- 230: Griff
- 240: Außenschale

## Patentansprüche

1. Türgriffmodul (100) für eine Griffvorrichtung (202) eines beweglichen Teils (201) eines Fahrzeugs (200), insbesondere eines Nutzfahrzeugs, aufweisend:
ein Gehäuse (10), in welchem eine Aufnahme (11) ausgebildet ist,
in der eine Elektronikeinheit (12) zum Steuern eines Sicherheitssystems (203) des Fahrzeuges (200) angeordnet ist,
wobei die Elektronikeinheit (12) mindestens ein Kommunikationselement (12a, 12b) zum Austauschen von Daten mit einer fahrzeugexternen Kommunikationseinheit (50) aufweist,
**dadurch gekennzeichnet,**
**dass** das Türgriffmodut (100) dazu ausgeführt ist, an einer Modulaufnahme (210) der Griffvorrichtung (202) montiert zu werden, die in Form einer bereits vorhandenen Aufnahme an der Griffvorrichtung (202), einer Schließzylinderaufnahme oder einer extra dafür herzustellenden Aufnahme in Form einer Bohrung ausgeführt ist.

2. Türgriffmodul (100) nach dem vorhergehenden Anspruch,
**dadurch gekennzeichnet,**
**dass** die Elektronikeinheit (12) mindestens ein Kommunikationselement (12a, 12b) in Form eines Sensorelementes (12a), insbesondere eines kapazitiven Sensorelementes aufweist, um die Elektronikeinheit (12) zu wecken,
und/oder dass die Elektronikeinheit (12) mindestens ein Kommunikationselement (12a, 12b) in Form eines drahtlosen Kommunikationselementes (12b), insbesondere eines NFC-, Bluetooth-, Infrarot-, GSM-, LTE-, UMTS-, Mobilfunk-, HF-, UHF-, LF- und/oder WLAN-Kommunikationselementes aufweist, um eine Kommunikation des Sicherheitssystems (203) des Fahrzeuges (200) und der fahrzeugexternen Kommunikationseinheit (50) sicherzustellen.

3. Türgriffmodul (100) nach einem der vorhergehenden Ansprüche,
**dadurch gekennzeichnet,**
**dass** das Gehäuse (10) einteilig oder zweiteilig mit einem ersten Gehäuseteil (10.1), welches zumindest zum Abdecken der Aufnahme (11) oder zum sichtbaren Anordnen an der Griffvorrichtung (202) dient, und mit einem zweiten Gehäuseteil (10.2) ausgebildet ist, welches zumindest zum Befestigen der Elektronikeinheit (12) oder zum Herstellen einer Verbindung des Verbindungselementes (20) mit dem Befestigungsadapter (30) dient,
und/oder dass das Gehäuse (10), insbesondere an einem zweiten Gehäuseteil (10.2), mindestens einen, vorzugsweise zwei, Aufnahmepins (15) aufweist, um die Elektronikeinheit (12) am Gehäuse (10) zu befestigen, insbesondere heißzuverstemmen, und/oder dass das Gehäuse (10), insbesondere an einem zweiten Gehäuseteil (10.2), eine Anschlussöffnung (16) für ein Anschlusselement (40), vorzugsweise für einen ersten Stecker (42) des Anschlusselementes (40) zum Anschließen an der Elektronikeinheit (12), aufweist,
und/oder dass das Gehäuse (10), insbesondere an einem zweiten Gehäuseteil (10.2), mindestens einen, vorzugsweise zwei, Füllstützen (14) aufweist, um zumindest die Aufnahme (11) mit einer Vergussmasse zu füllen oder das Gehäuse (10) an einer Außenseite (202a) der Griffvorrichtung (202) zu positionieren.

4. Türgriffmodul (100) nach einem der vorhergehenden Ansprüche,
**dadurch gekennzeichnet,**
**dass** das Gehäuse (10), insbesondere an einem zweiten Gehäuseteil (10.2), mindestens eine, vorzugsweise mehrere, bevorzugt einseitig angeordnete, Verbindungsöffnungen (17) aufweist, die mit Verbindungsstiften (18) an einem ersten Gehäuseteil (10.1) zusammenwirken, um das erste Gehäuseteil (10.1) am zweiten Gehäuseteil (10.2) zu befestigen, insbesondere heißzuverstemmen,
und/oder dass das Gehäuse (10), insbesondere an einem ersten Gehäuseteil (10.1) einen Betätigungsabschnitt (19) aufweist, um auf das mindestens ein Kommunikationselement (12a, 12b) der Elektronikeinheit (12) hinzuweisen,
und/oder dass das Gehäuse (10), insbesondere an einem ersten Gehäuseteil (10.1) mindestens einen, vorzugsweise mehrere, bevorzugt einseitig angeordnete, Hinterschnitte (10.3) aufweist, um das erste Gehäuseteil (10.1) am zweiten Gehäuseteil (10.2) zu positionieren.

5. Türgriffmodul (10) nach einem der vorhergehenden Ansprüche,
**dadurch gekennzeichnet,**
**dass** ein Anschlusselement (40), insbesondere in Form eines Kabels (41) mit einem ersten Stecker (42), insbesondere in Form eines verrastenden Steckers, zum Anschließen an der Elektronikeinheit (12) und einem zweiten Stecker (43) zum Anschließen am Sicherheitssystem (203) des Fahrzeuges (200), vorgesehen ist,
und/oder dass ein Anschlusselement (40), insbesondere an einem zweiten Stecker (43), eine Clipführung (43a) aufweist, um das Anschlusselement (40) am Fahrzeug (200), vorzugsweise an einem komplementär dazu ausgebildeten Montageclip (13) des Fahrzeuges (200), zu fixieren,
und/oder dass mindestens ein Führungsclip (43b) für ein Anschlusselement (40), insbesondere für ein Kabel (41) des Anschlusselementes (40), vorgesehen ist, um das Anschlusselement (40), vorzugsweise das Kabel (41) des Anschlusselementes (40), am Fahrzeug (200) zu positionieren.

6. Türgriffmodul (100) nach dem vorhergehenden Anspruch,
**dadurch gekennzeichnet,**
**dass** ein, insbesondere separater, Befestigungsadapter (30) zum Einsetzen von einer Innenseite (202i) der Griffvorrichtung (202) vorgesehen ist,
und/oder dass am Gehäuse (10) ein, insbesondere materialeinheitlich und/oder monolithisch mit dem Gehäuse (10) ausgebildetes, Verbindungselement (20) zum Einsetzen von einer Außenseite (202a) der Griffvorrichtung (202) vorgesehen ist,
und/oder dass das Türgriffmodul (100) über eine Verbindung eines gehäuseseitigen Verbindungselementes (20) mit einem, vorzugsweise separaten, Befestigungsadapter (30) an der Griffvorrichtung (202) befestigbar ist,
wobei insbesondere ein, vorzugsweise separater, Befestigungsadapter (30) zum Herstellen mindestens einer form- und/oder kraftschlüssigen Verbindung, einer Steck-Dreh-Verbindung, eines Bajonettverschlusses, eines Schraubverschlusses oder eines Rastverschlusses, mit einem gehäuseseitigen Verbindungselement (20) ausgebildet ist,
und/oder dass ein, vorzugsweise separater, Befestigungsadapter (30) einen, insbesondere zumindest abschnittsweise zylindrischen, Führungsabschnitt (31) aufweist, welches in einer Modulaufnahme (210), vorzugsweise in einer Schließzylinderaufnahme, der Griffvorrichtung (202) aufnehmbar ist,
und/oder dass ein, vorzugsweise separater, Befestigungsadapter (30) geometrisch komplementär zu einer Modulaufnahme (210), insbesondere zu einer Schließzylinderaufnahme, der Griffvorrichtung (202) ausgebildet ist.

7. Türgriffmodul (100) nach einem der vorhergehenden Ansprüche,
**dadurch gekennzeichnet,**
**dass** ein, vorzugsweise separater, Befestigungsadapter (30), insbesondere innerhalb eines Führungsabschnitts (31), ein, vorzugsweise im Wesentlichen ringförmiges, Aufnahmeelement (32) aufweist, das derart ausgebildet ist, um eine Verbindung eines gehäuseseitigen Verbindungselementes (20) mit dem Befestigungsadapter (30) in nur einer vorgegebenen Ausrichtung des Verbindungselementes (20) zum Befestigungsadapter (30) zu ermöglichen,
und/oder dass ein, vorzugsweise separater, Befestigungsadapter (30), insbesondere an einem Aufnahmeelement (32), mindestens ein, vorzugsweise nutförmiges, Aufnahmemittel (33) für ein, vorzugsweise nockenförmiges, Positioniermittel (23) an einem gehäuseseitigen Verbindungselement (20) aufweist.

8. Türgriffmodul (100) nach einem der vorhergehenden Ansprüche,
**dadurch gekennzeichnet,**
**dass** ein, vorzugsweise separater, Befestigungsadapter (30) zumindest einen, insbesondere außenseitig an einem Führungsabschnitt (31) abstehenden, Befestigungsarm (34) aufweist, um den Befestigungsadapter (30) an der Griffvorrichtung (202) form- und/oder kraftschlüssig zu befestigen,
und/oder dass ein, vorzugsweise separater, Befestigungsadapter (30), insbesondere an einem Befestigungsarm (34), ein Befestigungsmittel (35), bevorzugt in Form einer Aufnahmeöffnung für eine Schraube (35a) oder in Form eines Rastelementes für ein komplementäres Gegenrastelement der Griffvorrichtung (202), aufweist.

9. Türgriffmodul (100) nach einem der vorhergehenden Ansprüche,
**dadurch gekennzeichnet,**
**dass** ein, vorzugsweise separater, Befestigungsadapter (30) mindestens ein, insbesondere außenseitig an einem Führungsabschnitt (31) abstehendes, Zugentlastungselement (36) für ein Anschlusselement (40), insbesondere für ein Kabel (41) des Anschlusselementes (40), aufweist.

10. Türgriffmodul (100) nach einem der vorhergehenden Ansprüche,
**dadurch gekennzeichnet,**
**dass** ein gehäuseseitiges Verbindungselement (20) einen, insbesondere zumindest abschnittsweise zylindrischen, Führungskörper (21) aufweist, welches in einem Befestigungsadapter (30), insbesondere innerhalb eines Führungsabschnitts (31), aufnehmbar ist,
und/oder dass ein gehäuseseitiges Verbindungselement (20) geometrisch komplementär zu einem, vorzugsweise separaten, Befestigungsadapter (30) ausgebildet ist,
und/oder dass ein gehäuseseitiges Verbindungselement (20), insbesondere außenseitig, mindestens ein, vorzugsweise nockenförmiges, Positioniermittel (23) aufweist, welches mit einem Aufnahmeelement (32), insbesondere mit einem nutförmigen Aufnahmemittel (33), an einem, vorzugsweise separaten, Befestigungsadapter (30) in eine mechanische Wirkverbindung bringbar ist, um die Verbindung des Verbindungselementes (20) mit dem Befestigungsadapter (30) in nur einer vorgegebenen Ausrichtung des Verbindungselementes (20) zum Befestigungsadapter (30) zu ermöglichen.

11. Verfahren zum Montieren eines Türgriffmoduls (100) an einer Griffvorrichtung (202) eines beweglichen Teil (201) eines Fahrzeugs (200), insbesondere eines Nutzfahrzeugs (200),
wobei das Türgriffmodul (100) zum Austauschen von Daten mit einer fahrzeugexternen Kommunikationseinheit (50) und zum Steuern eines Sicherheitssystems (203) des Fahrzeuges (200) nach einem der vorhergehenden Ansprüche ausgebildet ist,
wobei ein Gehäuse (10) des Türgriffmoduls (100) an einer Außenseite (202a) der Griffvorrichtung (202) fixiert und durch einen Befestigungsadapter (30) von einer Innenseite (202i) der Griffvorrichtung (202) an der Griffvorrichtung (202) befestigt wird.

12. Verfahren nach dem vorhergehenden Anspruch,
**dadurch gekennzeichnet,**
**dass** das Türgriffmodul (100) durch Herstellen einer form- und/oder kraftschlüssigen Verbindung, insbesondere einer Steck-Dreh-Verbindung, vorzugsweise eines Bajonettverschlusses, Schraubverschlusses oder Rastverschlusses, eines, insbesondere materialeinheitlich und/oder monolithisch mit dem Gehäuse (10) ausgebildeten, Verbindungselementes (20) des Gehäuses (10) mit dem Befestigungsadapter (30) an der Griffvorrichtung (202) befestigt wird.

13. Verfahren zum Herstellen eines Türgriffmoduls (100) für eine Griffvorrichtung (202) eines beweglichen Teils (201) eines Fahrzeugs (200), insbesondere eines Nutzfahrzeugs (200), wobei das Türgriffmodul (100) nach einem der vorhergehenden Ansprüche zum Austauschen von Daten mit einer fahrzeugexternen Kommunikationseinheit (50) und zum Steuern eines Sicherheitssystems (203) des Fahrzeuges (200) ausgebildet ist,
wobei ein Gehäuse (10) für das Türgriffmodul (100) bereitgestellt wird, in welchem eine Aufnahme (11) mit einer Elektronikeinheit (12) zum Steuern des Sicherheitssystems (203) des Fahrzeuges (200) ausgebildet wird,
wobei die Elektronikeinheit (12) mindestens ein Kommunikationselement (12a, 12b) zum Austauschen von Daten mit einer fahrzeugexternen Kommunikationseinheit (50) aufweist.

14. Verfahren nach einem der vorhergehenden Ansprüche,
**dadurch gekennzeichnet,**
**dass** das Verfahren mindestens einen der folgenden Schritte aufweist:
a) Montieren der Elektronikeinheit (12) an einem zweiten Gehäuseteil (10.2) des Gehäuses (10),
b) Einführen eines ersten Steckers (42) eines Anschlusselementes (40) durch ein Verbindungselement (20) an einem zweiten Gehäuseteil (10.2) des Gehäuses (10), oder
c) Anschließen, insbesondere Verlöten, eines ersten Steckers (42) eines Anschlusselementes (40) an der Elektronikeinheit (12),
und/oder dass das Verfahren mindestens einen weiteren Schritt aufweist:
d) Befestigen eines ersten Gehäuseteils (10.1) des Gehäuses (10) an einem zweiten Gehäuseteil (10.2) des Gehäuses (10), um die Aufnahme (11) für die Elektronikeinheit (12) bereitzustellen,
und/oder dass das Verfahren mindestens einen weiteren Schritt aufweist:
e) Auffüllen der Aufnahme (11) mit einer Vergussmasse, um mindestens die Elektronikeinheit (12) oder einen ersten Stecker (42) eines Anschlusselementes (40) abzudichten.

15. Verfahren zum Bereitstellen eines Türgriffmoduls (100) für eine Griffvorrichtung (202) eines beweglichen Teil (201) eines Fahrzeugs (200), insbesondere eines Nutzfahrzeugs (200), wobei das Türgriffmodul (100) zum Austauschen von Daten mit einer fahrzeugexternen Kommunikationseinheit (50) und zum Steuern eines Sicherheitssystems (203) des Fahrzeuges (200) nach einem der vorhergehenden Ansprüche ausgebildet ist,
wobei das Verfahren mindestens ein Verfahren zum Herstellen des Türgriffmoduls (100) nach einem der vorhergehenden Ansprüche oder ein Verfahren zum Montieren des Türgriffmoduls (100) an der Griffvorrichtung (202) nach einem der vorhergehenden Ansprüche umfasst.

## Claims

1. Door handle module (100) for a handle device (202) of a movable part (201) of a vehicle (200), in particular a commercial vehicle, comprising:
a housing (10) in which a receptacle (11) is formed,
in which an electronic unit (12) for controlling a safety system (203) of the vehicle (200) is arranged,
wherein the electronic unit (12) comprises at least one communication element (12a, 12b) for exchanging data with a communication unit (50) external to the vehicle,
**characterized in that**
the door handle module (100) is designed to be mounted on a module receptacle (210) of the handle device (202), which is designed in the form of an already existing receptacle on the handle device (202), a lock cylinder receptacle or a receptacle in the form of a bore to be produced specially for this purpose.

2. Door handle module (100) according to the preceding claim,
**characterized in that**
the electronic unit (12) has at least one communication element (12a, 12b) in the form of a sensor element (12a), in particular a capacitive sensor element, for waking up the electronic unit (12),
and/or **in that** the electronics unit (12) has at least one communication element (12a, 12b) in the form of a wireless communication element (12b), in particular an NFC, Bluetooth, infrared, GSM, LTE, UMTS, mobile radio, HF, UHF, LF and/or WLAN communication element, in order to ensure communication of the security system (203) of the vehicle (200) and the communication unit (50) external to the vehicle.

3. Door handle module (100) according to any one of the preceding claims,
**characterized in that**
the housing (10) is formed in one piece or in two pieces with a first housing part (10.1), which is used at least for covering the receptacle (11) or for visible arrangement on the handle device (202), and with a second housing part (10.2), which is used at least for fastening the electronic unit (12) or for producing a connection of the connecting element (20) to the fastening adapter (30),
and/or **in that** the housing (10), in particular on a second housing part (10.2), has at least one, preferably two, locating pins (15) in order to fasten the electronics unit (12) to the housing (10), in particular to heat caulk it,
and/or **in that** the housing (10) has, in particular on a second housing part (10.2), a connection opening (16) for a connection element (40), preferably for a first plug (42) of the connection element (40) for connection to the electronics unit (12),
and/or **in that** the housing (10), in particular on a second housing part (10.2), has at least one, preferably two, filling supports (14) in order to fill at least the receptacle (11) with a potting compound or to position the housing (10) on an outer side (202a) of the handle device (202).

4. Door handle module (100) according to any one of the preceding claims,
**characterized in that**
the housing (10) has, in particular on a second housing part (10.2), at least one, preferably a plurality of, preferably unilaterally arranged, connecting openings (17) which interact with connecting pins (18) on a first housing part (10.1) in order to fasten the first housing part (10.1) to the second housing part (10.2), in particular to heat caulk it,
and/or **in that** the housing (10) has, in particular on a first housing part (10.1), an actuating section (19) for indicating the at least one communication element (12a, 12b) of the electronic unit (12),
and/or **in that** the housing (10) has, in particular on a first housing part (10.1), at least one, preferably a plurality of undercuts (10.3), preferably arranged on one side, in order to position the first housing part (10.1) on the second housing part (10.2).

5. Door handle module (10) according to any one of the preceding claims,
**characterized in that**
a connection element (40), in particular in the form of a cable (41) with a first plug (42), in particular in the form of a latching plug, for connection to the electronic unit (12) and a second plug (43) for connection to the safety system (203) of the vehicle (200), is provided, and/or **in that** a connection element (40), in particular on a second connector (43), has a clip guide (43a) in order to fix the connection element (40) to the vehicle (200), preferably to a mounting clip (13) of the vehicle (200) which is designed to be complementary thereto, and/or **in that** at least one guide clip (43b) is provided for a connection element (40), in particular for a cable (41) of the connection element (40), in order to position the connection element (40), preferably the cable (41) of the connection element (40), on the vehicle (200).

6. Door handle module (100) according to the preceding claim,
**characterized in that,**
a fastening adapter (30), in particular a separate fastening adapter (30), is provided for insertion from an inner side (202i) of the handle device (202),
and/or **in that** a connecting element (20), in particular of unitary material and/or monolithically formed with the housing (10), is provided on the housing (10) for insertion from an outer side (202a) of the handle device (202),
and/or **in that** the door handle module (100) can be fastened to the handle device (202) via a connection of a housing-side connecting element (20) to a, preferably separate, fastening adapter (30),
wherein in particular a, preferably separate, fastening adapter (30) is formed for producing at least one positive and/or non-positive connection, a plug-and-turn connection, a bayonet lock, a screw lock or a snap-in lock, with a connecting element (20) on the housing side,
and/or **in that** a, preferably separate, fastening adapter (30) has a guide section (31), in particular cylindrical at least in sections, which can be accommodated in a module receptacle (210), preferably in a lock cylinder receptacle, of the handle device (202),
and/or that a, preferably separate, fastening adapter (30) is geometrically complementary to a module receptacle (210), in particular to a lock cylinder receptacle, of the handle device (202).

7. Door handle module (100) according to any one of the preceding claims,
**characterized in that**
a, preferably separate, fastening adapter (30), in particular within a guide section (31), has a, preferably substantially annular, receiving element (32) which is designed in such a way as to enable a connection of a housing-side connecting element (20) to the fastening adapter (30) in only one predetermined alignment of the connecting element (20) with respect to the fastening adapter (30),
and/or **in that** a, preferably separate, fastening adapter (30), in particular on a receiving element (32), has at least one, preferably groove-shaped, receiving means (33) for a, preferably cam-shaped, positioning means (23) on a housing-side connecting element (20).

8. Door handle module (100) according to any one of the preceding claims,
**characterized in that**
a, preferably separate, fastening adapter (30) has at least one fastening arm (34), projecting in particular from the outside on a guide section (31), in order to fasten the fastening adapter (30) to the handle device (202) in a form-fitting and/or force-fitting manner,
and/or **in that** a, preferably separate, fastening adapter (30), in particular on a fastening arm (34), has a fastening means (35), preferably in the form of a receiving opening for a screw (35a) or in the form of a latching element for a complementary counter-latching element of the handle device (202).

9. Door handle module (100) according to any one of the preceding claims,
**characterized in that**
a, preferably separate, fastening adapter (30) has at least one strain relief element (36), in particular projecting on the outside on a guide section (31), for a connecting element (40), in particular for a cable (41) of the connecting element (40).

10. Door handle module (100) according to any one of the preceding claims,
**characterized in that**
a housing-side connecting element (20) has a guide body (21), in particular cylindrical at least in sections, which can be accommodated in a fastening adapter (30), in particular within a guide section (31),
and/or **in that** a housing-side connecting element (20) is geometrically complementary to a, preferably separate, fastening adapter (30),
and/or **in that** a housing-side connecting element (20) has, in particular on the outside, at least one, preferably cam-shaped, positioning means (23) which can be brought into mechanical operative connection with a receiving element (32), in particular with a groove-shaped receiving means (33), on a, preferably separate, fastening adapter (30), in order to allow the connecting element (20) to be connected to the fastening adapter (30) in only one predetermined alignment of the connecting element (20) with respect to the fastening adapter (30).

11. Method for mounting a door handle module (100) on a handle device (202) of a movable part (201) of a vehicle (200), in particular of a commercial vehicle (200), wherein the door handle module (100) is designed for exchanging data with a communication unit (50) external to the vehicle and for controlling a safety system (203) of the vehicle (200) according to one of the preceding claims,
wherein a housing (10) of the door handle module (100) is fixed to an outer side (202a) of the handle device (202) and is fixed to the handle device (202) by a fixing adapter (30) from an inner side (202i) of the handle device (202).

12. A method according to the preceding claim,
**characterized in that**
the door handle module (100) is fastened to the handle device (202) by producing a positive and/or non-positive connection, in particular a plug-in/rotary connection, preferably a bayonet lock, screw lock or latch lock, of a connecting element (20) of the housing (10), which connecting element (20) is, in particular, of unitary material and/or monolithic design with the housing (10), to the fastening adapter (30).

13. Method for producing a door handle module (100) for a handle device (202) of a movable part (201) of a vehicle (200), in particular a commercial vehicle (200), wherein the door handle module (100) according to one of the preceding claims is designed for exchanging data with a communication unit (50) external to the vehicle and for controlling a safety system (203) of the vehicle (200),
wherein a housing (10) is provided for the door handle module (100), in which a receptacle (11) is formed with an electronic unit (12) for controlling the security system (203) of the vehicle (200),
wherein the electronic unit (12) comprises at least one communication element (12a, 12b) for exchanging data with a communication unit (50) external to the vehicle.

14. Method according to any one of the preceding claims,
**characterized in that**
the method comprises at least one of the following steps:
a) mounting the electronics unit (12) on a second housing part (10.2) of the housing (10),
b) inserting a first plug (42) of a connecting element (40) through a connecting element (20) at a second housing part (10.2) of the housing (10), or
c) connecting, in particular soldering, a first connector (42) of a connection element (40) to the electronics unit (12),
and/or that the method comprises at least one further step:
d) attaching a first housing part (10.1) of the housing (10) to a second housing part (10.2) of the housing (10) to provide the receptacle (11) for the electronics unit (12),
and/or that the method comprises at least one further step:
e) filling the receptacle (11) with a potting compound to seal at least the electronics unit (12) or a first connector (42) of a connecting element (40).

15. Method for providing a door handle module (100) for a handle device (202) of a movable part (201) of a vehicle (200), in particular of a commercial vehicle (200), wherein the door handle module (100) is designed for exchanging data with a communication unit (50) external to the vehicle and for controlling a safety system (203) of the vehicle (200) according to one of the preceding claims,
wherein the method comprises at least one of a method of manufacturing the door handle module (100) according to any one of the preceding claims, or a method of mounting the door handle module (100) to the handle device (202) according to any one of the preceding claims.

## Revendications

1. Module de poignée de porte (100) pour un dispositif de poignée (202) d'une partie mobile (201) d'un véhicule (200), en particulier d'un véhicule utilitaire :
un boîtier (10) dans lequel est formé un logement (11),
dans lequelle est disposée une unité électronique (12) pour commander un système de sécurité (203) du véhicule (200),
dans lequel l'unité électronique (12) présente au moins un élément de communication (12a, 12b) pour échanger des données avec une unité de communication (50) externe au véhicule,
**caractérisé en ce que**
le module de poignée de porte (100) est conçu pour être monté sur un logement de module (210) du dispositif de poignée (202), qui est réalisé sous la forme d'un logement déjà existant sur le dispositif de poignée (202), d'un logement de cylindre de serrure ou d'un logement à fabriquer spécialement à cet effet sous la forme d'un alésage.

2. Module de poignée de porte (100) selon la revendication précédente,
**caractérisé en ce que**
l'unité électronique (12) présente au moins un élément de communication (12a, 12b) sous la forme d'un élément de détection (12a), en particulier d'un élément de détection capacitif, afin de réveiller l'unité électronique (12),
et/ou **en ce que** l'unité électronique (12) présente au moins un élément de communication (12a, 12b) sous la forme d'un élément de communication sans fil (12b), en particulier un élément de communication NFC, Bluetooth, infrarouge, GSM, LTE, UMTS, mobile, HF, UHF, LF et/ou WLAN, pour assurer une communication du système de sécurité (203) du véhicule (200) et de l'unité de communication (50) externe au véhicule.

3. Module de poignée de porte (100) selon l'une quelconque des revendications précédentes, **caractérisé en ce que**
le boîtier (10) est réalisé d'une seule pièce ou en deux parties avec une première partie de boîtier (10.1) qui sert au moins à recouvrir le logement (11) ou à le disposer de manière visible sur le dispositif de poignée (202), et avec une deuxième partie de boîtier (10.2) qui sert au moins à fixer l'unité électronique (12) ou à établir une liaison de l'élément de liaison (20) avec l'adaptateur de fixation (30),
et/ou **en ce que** le boîtier (10) présente, en particulier sur une deuxième partie de boîtier (10.2), au moins une, de préférence deux, broche(s) de réception (15) pour fixer l'unité électronique (12) sur le boîtier (10), en particulier pour la sertir à chaud,
et/ou **en ce que** le boîtier (10) présente, en particulier sur une deuxième partie de boîtier (10.2), une ouverture de raccordement (16) pour un élément de raccordement (40), de préférence pour un premier connecteur (42) de l'élément de raccordement (40) à raccorder à l'unité électronique (12),
et/ou **en ce que** le boîtier (10), en particulier sur une deuxième partie de boîtier (10.2), présente au moins un, de préférence deux, appuis de remplissage (14) pour remplir au moins le logement (11) avec une masse de scellement ou pour positionner le boîtier (10) sur un côté extérieur (202a) du dispositif de poignée (202).

4. Module de poignée de porte (100) selon l'une quelconque des revendications précédentes, **caractérisé en ce que**
le boîtier (10), en particulier sur une deuxième partie de boîtier (10.2), présente au moins une, de préférence plusieurs, ouvertures de liaison (17) disposées de préférence d'un seul côté, qui coopèrent avec des broches de liaison (18) sur une première partie de boîtier (10.1) pour fixer la première partie de boîtier (10.1) sur la deuxième partie de boîtier (10.2), en particulier pour la bloquer à chaud,
et/ou **en ce que** le boîtier (10), en particulier sur une première partie de boîtier (10.1), présente une section d'actionnement (19) pour indiquer l'au moins un élément de communication (12a, 12b) de l'unité électronique (12),
et/ou **en ce que** le boîtier (10), en particulier sur une première partie de boîtier (10.1), présente au moins une, de préférence plusieurs, contre-dépouilles (10.3), de préférence disposées d'un seul côté, pour positionner la première partie de boîtier (10.1) sur la deuxième partie de boîtier (10.2).

5. Module de poignée de porte (10) selon l'une quelconque des revendications précédentes, **caractérisé en ce qu'**
il est prévu un élément de raccordement (40), en particulier sous la forme d'un câble (41) avec un premier connecteur (42), en particulier sous la forme d'un connecteur à enclenchement, pour le raccordement à l'unité électronique (12) et un deuxième connecteur (43) pour le raccordement au système de sécurité (203) du véhicule (200), et/ou **en ce qu'**un élément de raccordement (40), en particulier sur un deuxième connecteur (43), présente un guidage par clip (43a), afin de fixer l'élément de raccordement (40) sur le véhicule (200), de préférence sur un clip de montage (13) du véhicule (200) réalisé de manière complémentaire à celui-ci,
et/ou **en ce qu'**il est prévu au moins un clip de guidage (43b) pour un élément de raccordement (40), en particulier pour un câble (41) de l'élément de raccordement (40), afin de positionner l'élément de raccordement (40), de préférence le câble (41) de l'élément de raccordement (40), sur le véhicule (200).

6. Module de poignée de porte (100) selon la revendication précédente,
**caractérisé en ce qu'**
un adaptateur de fixation (30), en particulier séparé, est prévu pour être inséré par un côté intérieur (202i) du dispositif de poignée (202),
et/ou **en ce qu'**il est prévu sur le boîtier (10) un élément de liaison (20), réalisé en particulier dans le même matériau et/ou de manière monolithique avec le boîtier (10), pour l'insertion d'un côté extérieur (202a) du dispositif de poignée (202),
et/ou **en ce que** le module de poignée de porte (100) peut être fixé sur le dispositif de poignée (202) par une liaison d'un élément de liaison (20) côté boîtier avec un adaptateur de fixation (30), de préférence séparé,
dans lequel, en particulier, un adaptateur de fixation (30), de préférence séparé, est réalisé pour établir au moins une liaison par complémentarité de forme et/ou de force, une liaison par enfichage et rotation, une fermeture à baïonnette, une fermeture à vis ou une fermeture à encliquetage, avec un élément de liaison (20) côté boîtier,
et/ou **en ce qu'**un adaptateur de fixation (30), de préférence séparé, présente une section de guidage (31), en particulier au moins partiellement cylindrique, qui peut être reçue dans un logement de module (210), de préférence dans un logement de cylindre de serrure, du dispositif de poignée (202),
et/ou **en ce qu'**un adaptateur de fixation (30), de préférence séparé, est réalisé de manière géométriquement complémentaire à un logement de module (210), en particulier à un logement de cylindre de fermeture, du dispositif de poignée (202).

7. Module de poignée de porte (100) selon l'une quelconque des revendications précédentes, **caractérisé en ce qu'**
un adaptateur de fixation (30), de préférence séparé, présente, en particulier à l'intérieur d'une section de guidage (31), un élément de réception (32), de préférence sensiblement annulaire, qui est conçu de manière à permettre une liaison d'un élément de liaison (20) côté boîtier avec l'adaptateur de fixation (30) dans seulement une orientation prédéfinie de l'élément de liaison (20) par rapport à l'adaptateur de fixation (30),
et/ou **en ce qu'**un adaptateur de fixation (30), de préférence séparé, présente, en particulier sur un élément de réception (32), au moins un moyen de réception (33), de préférence en forme de rainure, pour un moyen de positionnement (23), de préférence en forme de came, sur un élément de liaison (20) côté boîtier.

8. Module de poignée de porte (100) selon l'une quelconque des revendications précédentes, **caractérisé en ce qu'**
un adaptateur de fixation (30), de préférence séparé, présente au moins un bras de fixation (34), dépassant en particulier du côté extérieur sur une section de guidage (31), afin de fixer l'adaptateur de fixation (30) sur le dispositif de poignée (202) par complémentarité de forme et/ou de force,
et/ou **en ce qu'**un adaptateur de fixation (30), de préférence séparé, présente, en particulier sur un bras de fixation (34), un moyen de fixation (35), de préférence sous la forme d'une ouverture de réception pour une vis (35a) ou sous la forme d'un élément d'encliquetage pour un élément d'encliquetage opposé complémentaire du dispositif de poignée (202).

9. Module de poignée de porte (100) selon l'une quelconque des revendications précédentes, **caractérisé en ce qu'**
un adaptateur de fixation (30), de préférence séparé, présente au moins un élément de décharge de traction (36), en particulier faisant saillie du côté extérieur sur un section de guidage (31), pour un élément de raccordement (40), en particulier pour un câble (41) de l'élément de raccordement (40).

10. Module de poignée de porte (100) selon l'une quelconque des revendications précédentes, **caractérisé en ce qu'**
un élément de liaison (20) côté boîtier présente un corps de guidage (21), en particulier cylindrique au moins par sections, qui peut être reçu dans un adaptateur de fixation (30), en particulier à l'intérieur d'une section de guidage (31),
et/ou **en ce qu'**un élément de liaison (20) côté boîtier est réalisé de manière géométriquement complémentaire à un adaptateur de fixation (30), de préférence séparé, et/ou **en ce qu'**un élément de liaison (20) côté boîtier présente, en particulier côté extérieur, au moins un moyen de positionnement (23), de préférence en forme de came, qui peut être amené en liaison active mécanique avec un élément de réception (32), en particulier avec un moyen de réception (33) en forme de rainure, sur un adaptateur de fixation (30), de préférence séparé, afin de permettre la liaison de l'élément de liaison (20) avec l'adaptateur de fixation (30) dans seulement une orientation prédéfinie de l'élément de liaison (20) par rapport à l'adaptateur de fixation (30).

11. Procédé de montage d'un module de poignée de porte (100) sur un dispositif de poignée (202) d'une partie mobile (201) d'un véhicule (200), notamment d'un véhicule utilitaire (200), le module de poignée de porte (100) étant configuré pour échanger des données avec une unité de communication (50) externe au véhicule et pour commander un système de sécurité (203) du véhicule (200) selon l'une quelconque des revendications précédentes,
dans lequel un boîtier (10) du module de poignée de porte (100) est fixé sur un côté extérieur (202a) du dispositif de poignée (202) et est fixé au dispositif de poignée (202) par un adaptateur de fixation (30) depuis un côté intérieur (202i) du dispositif de poignée (202).

12. Procédé selon la revendication précédente,
**caractérisé en ce que**
le module de poignée de porte (100) est fixé au dispositif de poignée (202) par la réalisation d'une liaison par complémentarité de forme et/ou de force, en particulier d'une liaison par enfichage et rotation, de préférence d'une fermeture à baïonnette, d'une fermeture à vis ou d'une fermeture à encliquetage, d'un élément de liaison (20) du boîtier (10), réalisé en particulier dans le même matériau et/ou de manière monolithique avec le boîtier (10), avec l'adaptateur de fixation (30).

13. Procédé de fabrication d'un module de poignée de porte (100) pour un dispositif de poignée (202) d'une partie mobile (201) d'un véhicule (200), notamment d'un véhicule utilitaire (200), le module de poignée de porte (100) selon l'une des revendications précédentes étant configuré pour échanger des données avec une unité de communication (50) externe au véhicule et pour commander un système de sécurité (203) du véhicule (200),
dans lequel un boîtier (10) est prévu pour le module de poignée de porte (100), dans lequel un logement (11) est formé avec une unité électronique (12) pour commander le système de sécurité (203) du véhicule (200),
dans lequel l'unité électronique (12) présente au moins un élément de communication (12a, 12b) pour échanger des données avec une unité de communication (50) externe au véhicule.

14. Procédé selon l'une quelconque des revendications précédentes,
**caractérisé en ce que**
le procédé comprend au moins une des étapes suivantes :
a) montage de l'unité électronique (12) sur une deuxième partie (10.2) du boîtier (10),
b) l'insertion d'un premièr connecteur (42) d'un élément de raccordement (40) à travers un élément de liaison (20) sur une deuxième partie (10.2) du boîtier (10), ou
c) le raccordement, en particulier le brasage, d'un premièr connecteur (42) d'un élément de raccordement (40) à l'unité électronique (12),
et/ou **en ce que** le procédé comprend au moins une étape supplémentaire :
d) fixer une première partie de boîtier (10.1) du boîtier (10) à une deuxième partie de boîtier (10.2) du boîtier (10) afin de fournir le logement (11) pour l'unité électronique (12),
et/ou **en ce que** le procédé comprend au moins une étape supplémentaire :
e) remplir le logement (11) avec une masse de scellement pour rendre étanche au moins l'unité électronique (12) ou un premier connecteur (42) d'un élément de raccordement (40).

15. Procédé de fourniture d'un module de poignée de porte (100) pour un dispositif de poignée (202) d'une partie mobile (201) d'un véhicule (200), notamment d'un véhicule utilitaire (200), le module de poignée de porte (100) étant configuré pour échanger des données avec une unité de communication (50) externe au véhicule et pour commander un système de sécurité (203) du véhicule (200) selon l'une quelconque des revendications précédentes,
le procédé comprenant au moins un procédé de fabrication du module de poignée de porte (100) selon l'une quelconque des revendications précédentes ou un procédé de montage du module de poignée de porte (100) sur le dispositif de poignée (202) selon l'une quelconque des revendications précédentes.
